# EUROPÄISCHE PATENTANMELDUNG

(11) **EP 1 852 576 A2**
(43) Veröffentlichungstag der Anmeldung: **07.11.2007**
(21) Anmeldenummer: 07009041.0
(22) Anmeldetag: 04.05.2007
(51) Int. Cl.: F01K 25/10, F02G 5/02, B01D 53/00, F01C 1/44

(54) **Verfahren zur Gewinnung, Speicherung und Aufbereitung von Arbeitsmitteln, Verfahren zur Nutzung von Arbeitsmitteln über einen Rotationsschwenkkolbenmotor**

(30) Priorität: 05.05.2006 DE 102006020875
(71) Anmelder: Herrmann, Klaus, 12355 Berlin (DE)
(72) Erfinder: Herrmann, Klaus, 12355 Berlin (DE)

(57) **Zusammenfassung**

Rotationsschwenkkolbenmotor (50, 50a), Verfahren zur Gewinnung, Speicherung und Aufbereitung der Arbeitsmittel und ein Verfahren zum Betreiben eines Rotationsschwenkkolbenmotors (50, 50a) mit doppelwirkenden Schwenkkolben (104, 104a, 104b), die über eine schiefe Ebene ein hohes Drehmoment an der/den Motorwellen (103, 103a, 103b) erzeugen.

Die nach dem neuen Verfahren gewonnenen und aufbereiteten Arbeitsmittel Stickstoff und Kohlendioxyd werden für eine vorteilhafte Verwendung, den Umweltbedingungen angepassten thermophysikalischen Zuständen aufbereitet und in einer zweiten Energiewandelkette zur Erzeugung von thermischer und mechanischer Energie genutzt.

Rotationsschwenkkolbenmotor (50, 50a) zur Nutzung des neuen Verfahrens (6 - 10) und der Anwendung zum Betreiben eines Rotationsschwenkkolbenmotors, mit einem oder mehreren Motorgehäusen (101, 101a, 101b) und einem oder mehreren Rotoren (102, 102a, 102b), dessen Rotorachse (103, 103a, 104b) exzentrisch bis konzentrisch angeordnet ist, erzeugt aus einer oder mehreren unterschiedlichen Energiequellen, fünf Energieerscheinungsformen in einer Anlage und das umweltfreundlich, ohne Schadstoffe, energieeffizient und macht den Menschen unabhängig von Erdöl als Brennstoff.

## Beschreibung

Die Erfindung betrifft einen Rotationsschwenkkolbenmotor mit doppelwirkenden Kolben, die über eine schiefe Ebene ein hohes Drehmoment erzeugen, ein Verfahren zur Gewinnung, Speicherung und Aufbereitung der Arbeitsmittel und ein Verfahren zum Betreiben des Rotationsschwenkkolbenmotors in einem teilgeschlossenen Kreislaufprozess.

Die Arbeitsmittel Luft, Stickstoff, Kohlendioxyd, Sauerstoff und Wasser werden als Mischgas geregelt aufbereitet und erzeugen in einem Arbeitsfließprozess über den Rotationsschwenkkolbenmotor fünf Energieerscheinungsformen als:
Kälte (Klimaanlagentechnik)
Wärme (Heizungstechnik)
Druck (Pneumatik)
Bewegung (Mechanik)
elektrische Energie (Energietechnik)
und das umweltfreundlich aus vielen Energiequellen. Gleichzeitig werden die Arbeitsmittel auch als Energiespeichermittel genutzt. Als Brennstoffe werden flüssige und gasförmige Kohlenwasserstoffe in Form von Biomasse eingesetzt. Die Energieumwandlung und der Rotationsschwenkkolbenmotor ist für den mobilen und stationären Antriebseinsatz geeignet.

### Stand der Technik

Rotationsschwenkkolbenmotore sind als Verbrennungsmotore insbesondere auch zum Betrieb von einem Wasserstoff-Knallgasgemisch bekannt. Aus der Offenlegungsschrift DE 10319895 A1 wird ein Rotationsschwenkkolbenmotor und sein Betriebsverfahren beschrieben.

Die Nachteile gegenüber der eingangs genannten Art sind:
Die Schwenkkolben arbeiten nur als drehschwingende Absperrteile. Die Unterseite, die in den Rotor eintauchende Radiusfläche des Schenkkolbens, die Schwenkkolbenkammer, wird nur mit dem Abgasdruck gegen die abzudichtenden Flächen und der Gehäuseinnenwand gepresst, dabei entsteht Reibungsdruck aber kein Drehmoment, dass auf die Rotorwelle wirken kann.

Die Lagerung über die Schwenkradien und Zentiwinkelspitzen liegen im heißen Arbeits- und Druckbereich, der bei einer Umdrehung dreimal durchfahren wird, das bewirkt eine hohe Beanspruchung für Werkstoffe und alle Dichtungen bei einer Verbrennungstemperatur von über 1200° C. Die Schwenkkolben haben für diesen Arbeitsweg und die relative hohe Schwenkbewegung keine ausreichende Kühlung, dazu müssen die Werkstoffe Trockenlaufeigenschaften haben.

Das Verfahren Wasserstoff mit Sauerstoff zu oxydieren ist sehr komplex, die chemische explosionsartige Umwandlung ergibt als Verbrennungsendprodukt Wasser, das ist nur bedingt umweltfreundlich. Die Herstellung von flüssigem Wasserstoff ist sehr energieaufwendig, mit einer Lagertemperatur von -253° C bei flüssigem Wasserstoff gibt es große Kälteverluste, bei komprimiertem gasförmigen Wasserstoff gibt es Massenverluste und darf nur unter Beobachtung strenger Sicherheitsvorschriften mit hohen Auflagen benutzt werden. Der Gesamtwirkungsgrad von der Quelle bis zum Rad liegt unter 15%. Die Wasserstofftechnik ist lediglich eine Fortsetzung der heutigen Verbrennungsmotorentechnik von Benzin- und Dieselmotoren, mit der Abhängigkeit von fossilen Energieträgern und den Abgasen, den Schadstoffen und Treibhausgasen zum Schaden für die Menschheit und der Umwelt.

Unter der internationalen Publication Nr. W001/86119 A1 wird ein Rotationsschwenkkolbenmotor mit tangential gelagerten Absperrteilen beschrieben. Nachteilig an dieser Lösung ist, das die Schwenkkolben zur Rotorseite mit Druckfedern arbeiten, die den Anpressdruck der Kolben an die Gehäusewand ständig aufbringen müssen. Bei einer Umdrehung wird jede Druckfeder zweimal gespannt, das bedeutet ein hoher Verlust an Nutzarbeit und die Druckfedern sind zusätzlich Verschleißteile. Betriebstemperaturen des Arbeitsmittels über 200° C werden die Spannkraft der Druckfedern negativ beeinflussen und das Einsatzgebiet einschränken.

Die Lagerung der Kolben im Rotor und die geschlossenen L-Form bringen große Druck- und Strömungsverluste mit sich. Das Drehmoment wird tangential nur von der vorderen Hälfte der Bogenfläche erzeugt und da es sich um eine Volumenstrommaschine handelt, ist das Schluckvolumen sehr groß.

Des weiteren werden Kreislaufprozesse in den Anmeldungen DE 19524171 A1, DE 4304688 A1 beschrieben.

Nachteilig für diese Verfahren sind die sehr hohen Investitionskosten, die teuren Werkstoffe und die Effektivität der Technik in der Praxis. Kältekraftanlagen, die auch organisch Ranking-Prozess (ORC) genannt werden und mit Kältemittel arbeiten, haben wegen der geringen Temperaturdifferenz nach der Entspannungsmaschine einen effektiven Wirkungsgrad von maximal 12% bei der Wandlung in mechanische Energie. Nimmt man anorganische Kältemittel wie z.B. Ammoniak, erhöht sich der Wirkungsgrad auf 15%. Das aber nur unter der Voraussetzung, das die Wärmequelle eine ausreichende Temperaturdifferenz von mindestens +90° C bis 120° C gegenüber der Umwelttemperatur von +15° C kostenlos erbringt.

Als Beispiel: es werden in Anspruch 7 Seite 6, Zeile 35 - 40 das Arbeitsmittel Stickstoff genannt. Ein Auto, 1200kg Masse, soll 100km im Stadtverkehr weit fahren, dazu benötigt es an Arbeitsenergie (Erfahrungswerte) 18KWh. Stickstoff hat eine Gesamtenthalpie von 400kj/kg +20° C. Nimmt man einen Wirkungsgrad, theoretisch effektiven Wirkungsgrad von 50%, so müssen 320kg Stickstoff verdampft und kondensiert werden, dazu wird mindestens eine Verdampfungsfläche von 12m² und eine ebenso große Kondensatorfläche gebraucht und das Arbeitsmittel von 160kg muss mindestens 8mal in einen geschlossenen Kreislaufprozess gefahren werden und das gerade eben wegen der auf Seite Anspruch 11, Zeile 50 - 65 zitierten Begründungen. Hinzu kommt, das Arbeitsmittel aus' FCKW, Methan, Kohlenwasserstoffe brennbar, giftig und umweltschädigende Effekte besitzen.

Mit der Patentanmeldung DE 10352520.3 - 13 wird ein Kälte- und Warmkreislaufprozess beschreiben. Die flüssigen Arbeitsmittel Luft und Stickstoff werden in vakuumisolierten Tanks gespeichert. Die Nachteile sind die Kälteverluste des Arbeitsmittels bei einer Lagertemperatur von -160° C bei längerem Stillstand der Anlage. Der vakuumisolierte Tank bei 1001 Volumen hat ein Gewicht von 140kg bei 24bar Betriebsdruck. Die Tanktechnik ist aufwendiger als bei drucklosen flüssigen Brennstoffen. Die Arbeitskolben des Rotationsschwenkkolbenmotors pendeln auf einer Kreisbahn und erzeugen dabei erhöhte Reibung zwischen Motorwelle und Kolben. Motor- und Getriebetechnik sind aufwendig und für Antriebsdrehzahlen über 900U/min ist ein Übersetzungsgetriebe und für Vor- und Rücklauf ein Wechselgetriebe erforderlich.

### Aufgabenstellung

Aufgabe dieser Erfindung ist es, ein Verfahren zur Gewinnung, Speicherung und Aufbereitung des Arbeitsmittels, ein Verfahren zum Betreiben eines Rotationsschwenkkolbenmotors und einen Rotationsschwenkkolbenmotor zu schaffen, der effizient die Energie des Arbeitsmittels in mechanische Bewegungsenergie wandelt und dessen Aufbau einfach, seine Arbeitsweise und Anwendung optimal für die Erzeugung eines Drehmoments ist.

Die Aufgabe wird hinsichtlich der beiden Verfahren mit den Merkmalen des 1. 3. 5. 6. 7. 9. und 10. Patentanspruchs und hinsichtlich der Vorrichtung mit den Merkmalen des 11. 12. 13. 15. 22. 23. und 24. Patentanspruchs gelöst. Vorteilhafte Weiterentwicklungen und Ausgestaltungen sind Gegenstand der Unteransprüche.

Der Rotationsschwenkkolbenmotor 50, der insbesondere als ein Druckgasmotor für den Betrieb mit verschiedenen Arbeitsmitteln auch als Mischgas ausgelegt ist, besteht im wesentlichen aus einem zylinderförmigen Gehäuse 101, in dem sich ein zylinderförmiger Rotor 102 dreht, dessen Rotorachse 103 exzentrisch zum zylinderförmigen Gehäuse 101 angeordnet ist. Auf dem Umfang des Rotors sind in gleichmäßigen Abständen Schwenkkolben 104 angelenkt. Motorgehäuse 101 und Rotor 102 bilden einen sichelförmigen Arbeitsraum 105, in dem die Schwenkkolben ausschwenken. Dieser sichelförmige Arbeitsraum 105 ist in zwei gleich große Arbeitsräume aufgeteilt, den Expansionsraum 106 und den Verdichtungsraum107 des Arbeitsmittels.

Der Rotor 102 ist mit Ausnehmungen, die als innere Schwenkkolbenkammer 108 bezeichnet werden, versehen, in den die Kolben ein- und ausschwenken und dabei in der unteren Schwenkkolbenkammer 108 geführt werden.

Die obere, äußere radiale Kolbenform 109 wird im wesentlichen von der Motorgehäuseform bestimmt, die untere rotorseitige Kolbenfläche 110 ist keil-, pfeil- oder bogenförmig ausgebildet. Werden die unteren Schwenkkolbenflächen 110 mit dem vorgespannten Arbeitsmittel beaufschlagt, so dichten die Kolbenoberkanten 111 axial, die obere Schwenkkolbenkammer 112 zwischen dem Gleitringzylinder 113, dem Rotor 102 und den Schwenkkolben 104 auf der Expansionsseite 106, ständig ab. Die Expansionskräfte des vorgespannten Arbeitsmittel wirken über die untere Schwenkkolbenfläche 110 und die obere vordere Schwenkkolbenfläche 115. Zur besseren Druckverteilung und zur vergrößerten Kraftübertragung sind die Schwenkkolbenflächen 110, 115 mit Ausfräsungen und Auswölbungen versehen.

Die Schwenkkolbenkammern 108 und 112 bilden für einen Schwenkkolben 104 zwei Arbeitskammern 108 und 112. Der Schwenkkolben 104 arbeitet beidseitig, doppelt wirksam in den Arbeitskammern 108, 112. Die obere gehäuseseitige 112 und eine untere 108 rotorseitige.

Die darin eingeschlossene Druckenergie des Arbeitsmittels erzeugt über die Kolbenflächen 115, 110 und dem Arbeitskammervolumen mechanische Energie. Das Gesamtvolumen der oberen Arbeitskammern wird begrenzt durch die Oberfläche des Rotors 102, die Zylinderbohrung 105a und dem Zylinderseitenteil 141, die den Raum seitlich abschließen. Das Gesamtvolumen der unteren Arbeitskammer entspricht den Volumenausnehmungen 108 einschließlich der zylindrisch axialen angeordneten Depot- und Dosierkammer 117 abzüglich des Materialvolumens der Schwenkkolben 104. In der oberen Arbeitskammer wird die Druckenergie, die theoretisch in mechanische Bewegungsenergie umgewandelt werden kann, berechnet sich bei Umgebungstemperatur von 15°C aus dem Produktdifferenzdruck (Arbeitsmitteldruck auf der Einlassseite minus dem Arbeitsmitteldruck auf der Auslassseite) mal dem Gesamtvolumen der Arbeitskammern auf der Expansionsseite. Bei Arbeitsmitteltemperaturen über +20° C ist auch zusätzlich die anfallende thermische Energieumwandlung durch die polytrope Expansion des Arbeitsmittels mit einzurechnen. Der Arbeitsmitteldruck beaufschlagt die ausgefahrene keilförmige Schwenkkolbenfläche 110, 115 und bewirkt somit die Drehbewegung des Rotors. In der unteren rotorseitigen Schwenkkolbenkammer 108 wird die Arbeit des vorgespannten Arbeitsmittels rein aus der Expansionsenergie des Arbeitsmittels gewonnen. Das vorgespannte Arbeitsmittel bewirkt über die unteren keilförmigen oder halbzylinderförmigen Schwenkkolbenflächen 110 mal dem Schwenkkolbenradius 118 ein Drehmoment auf die zylinderförmige Motorgehäusewand 101. Das somit erzeugte Drehmoment bewirkt über die Exzentrizität zwischen Motorgehäusewand 101 und Rotor 102 eine Drehbewegung des Rotors 102.

Die Arbeitsweise in der unteren Schwenkkolbenkammer 108, ist thermodynamisch, vergleichbar mit dem eines Hubkolbenmotors mit Kurbeltrieb, aber mit dem Vorteil, keiner oszillierender Bauteile und Massen. So kann die untere Schwenkkolbenkammer 108, mit einem viel höheren Arbeitsdruck beaufschlagt werden oder mit einem zweiten anderen gasförmigen oder auch flüssigen Arbeitsmittel beschickt werden, das ermöglicht einen Hybridantrieb.

Zur Reduzierung des Arbeitsmittelmassenstroms wird nur die untere Schwenkkolbenarbeitskammer 108 mit dem vorgespannten Arbeitsmittel geregelt beschickt. Das führt zu einer Optimierung der effektiven Leistung mit gleichzeitiger Verringerung des Schluckvolumens des Schwenkkolbenmotors.

Die Einleitung des Arbeitsmittels in die Schwenkkolbenkammer 108, 112. erfolgt durch die Einlässe 119, 120, 121, 122, 123 und die Ausleitung des Arbeitsmittel durch die Auslässe 124, 125, 126, 127, 127a nach dem Stand der Technik von Druckluftmotoren oder Hydraulikmotoren, radial, axial oder koaxial durch die Motorgehäusewand 101 der Zylinderdeckel 142 oder die Rotorwelle 103. Der Rotor 102 ist auf die Rotorwelle 103 aufgeschrumpft. So sind auch die Abdichtungen 129 und der Kolbenauffang 131 der Schwenkkolben 104 in den Schwenkkolbenkammern 108, 108a 108b, 108c und der Rotorwelle 103, so auch deren Lagerung 136, 137, 138 oft beschrieben worden.

Die Führung 130, Abdichtung 129, Dichtleiste 187, Kolbenauffang 131, 185, 186 mit Schwenkkolbenkammmerkante 188 und Lagerung 132, 133, 134 der Schwenkkolben 104 ist im Zusammenhang von der Arbeitstemperatur, der Druckdifferenz und dem Arbeitsfluid, so wie auch der Werkstoffpaarung zu sehen. Die Lagerung der Drehachse 132, 133, 134 der Schwenkkolben 104 ist halbzylinderförmig axial ausgeführt 132, kann verstärkt werden durch mittig gelagerte Drehbolzen 133. Für sehr hohe Beanspruchungen hat der Schwenkkolben eine axiale Bohrung mit einem Kreisausschnitt 134, die über einer Zylinderachse mit einem Stegkörper 135 der drehmomentenfest mit dem Rotorkörper 102 verbunden ist.

Der Stegkörper 135 verstärkt mit seinem Materialkörper den Rotor 102, dessen Arbeitskammernwand 189 und trennt gleichzeitig axial die untere Schwenkkolbenkammer 108 von der oberen äußeren Schwenkkolbenkammer 112, 107, 128 gasdicht. Der Vorteil diese Anordnung ist, das die Drehachse des Stegkörpers 135 nicht im direkten Kontakt mit den heißen Arbeitsmittel kommt und die Lagerung mechanisch stabil ist. Dadurch kann der Schwenkkolben 104 gasdicht unter großen Druckunterschieden arbeiten, mit einer hohen Lebensdauer für ein bewegliches Teil bei einer Ausschwenkung pro Umdrehung.

Motorgehäuse 101 und Rotor 102 bilden einen sichelförmigen Arbeitsraum, der in zwei gleich große Kammervolumen 106, 107 durch den symmetrischen Aufbau aufgeteilt ist. Die erste Hälfte, die Einlassseite, ist die Expansionsarbeitsseite 106, die zweite Hälfte107, die Auslassseite, ist die Verschiebeseite oder auch nach Regelung des Arbeitsauslassdrucks, die erneute Druckaufbauseite 107. Der Schwenkkolbenmotor 50 arbeitet somit auch als Verdichter und zwar mit der oberen Druckkammer 107 und der unteren Druckkammer 108. Dabei kann das Arbeitsmittel getrennt oder in Reihe geschaltet verdichtet werden.

Die obere Druckarbeitskammer 107 arbeitet über die Schwenkkolbenbogenfläche 109, die tangential auf das Arbeitsmittel wirken, als Volumenstromverdichter mit der Möglichkeit von großen Volumenströmen mit einem Druckverhältnis von bis zu 2,5. Dabei wird nur eine Arbeitsleistung von 30 - 35% gegenüber einer Hubkolbenverdichtung angefordert.

Die Schwenkkolbenoberkante 111 berührt bei einer Druckregelung über Regelorgane 51, die außerhalb angeordnet sind, nur scheinbar den Gehäusegleitzylinder 113, dadurch strömt ein Teilvolumen in die nachlaufende Arbeitskammer und die Gasmoleküle können nur zu 52% ihrer potentiellen Druckenergie im Bereich der Schwenkkolbenoberfläche 109 aufbauen, dazu kann diese Kraft nur tangential wirken und die Verdichtungsarbeit reduziert sich um den gleichen Prozentanteil.

Durch die gleitenden Werkstoffeigenschaften des Gehäusegleitzylinders 113, wie molibdäne Graphitanteile, verringert erheblich die Reibungskraft. Ein Teil des verdichteten Arbeitsmittels strömt über die im Zylinderseitenteil 141 eingefrästen Kanäle 190 von der Druckkammer 107 in die Expansionskammer 112 und wandelt somit die Rotationsenergie in Nutzarbeit.

Der erzeugte Arbeitsdruck wird von der oberen Arbeitskammer 107, 112 über radial eingefräste Schlitzkanäle 136 in den Seitenteilen 141, 141a oder außerhalb angeordneter Regelorgane 51 in die untere Arbeitskammer 108, 108a als Vordruck gefahren und dort nach dem Hubkolbenprinzip verdichtet. Als reiner Verdichter arbeitender Rotationsschwenkkolbenverdichter 150, 150a sind die unteren Kolbenflächen 151, 151a als Keilform ausgebildet, das ergibt über die Winkelfunktion einen geringen Arbeitsaufwand für die Verdichtung des Arbeitsmittels.

Die Arbeitsweise eines Rotationsschwenkkolbenverdichter 150,150a ist zweistufig. In der ersten oberen Stufe 152, 152a wird das Arbeitsmittel mit einem Druckverhältnis 2-2,5 in der zweiten unteren Arbeitsstufe 153, 153a mit einem Druckverhältnis 4-8 verdichtet. Die äußere radiale Kolbenform 155, 155a wird tangential vom Arbeitsmittel beaufschlagt und bildet den oberen Arbeitsraum 152, 152a zwischen den Schwenkkolben 104, 104a und der ellipsenförmigen oder zylinderförmigen Gehäusewand 101, 113, 114, 101a, 113a, 114a. Die Verdichtung erfolgt auf der Nebenachse im kleinsten Durchmesser des Rotors 102, 102a, den Einlässe 157, 157a, 158, 158a, 159, 159a, und den Arbeitsdruckzwischenstufen 178, 179, 178a, 179a, dem Auslass 156 werden axial durch den Seitendeckel 142, 142a und durch den Seitendeckel 142, 142a und durch koaxiale eingefräste Schlitze 154, 154a geführt. Die Rotorachsen 103, 103a sind konzentrisch mit den Zylindern 101, 101a über die luftgepolsterten Kugellager 137, 138 schwimmend gelagert oder mit Gleitlagern 148 geführt.

Als Besonderheit können die oberen Schwenkkolbenkanten 111, 111a außen an der Motorgehäusewand 101 durch Kugellager 194 gestützt werden, damit sie keinen Reibungswiderstand aufbauen können. Die Kugellageraußenwand wird durch einen eingepressten metallischen Zylinderstützring 144 beschichtet, mit einem griffigen, weichen und elastischen Werkstoff, der die Aufgabe hat, das Kugellager vor thermischen und mechanischen Beanspruchungen zu schützen. Das vorgespannte Arbeitsmittel wird über den Zylinderseitendeckel 142 und dem Zylinderseitenteil 141 durch die Einlassbohrungen 119, 120, 121, 122 mit im Kreisumfang eingefrästen Schlitzkanälen 136 in die axialen Depotkammern 117, 128 geregelt eingeführt. Aus den halb- oder zylinder- oder keilförmigen Depotkammern 117, 128 werden dann die obere 115 und/oder untere Schwenkkolbenfläche 110 mit dem Arbeitsmitteldruck impulsartig beaufschlagt.

Die Impulszahl pro Umdrehung entspricht gleich der Kolbenanzahl 104 des Rotors 102. Die Expansionskraft wirkt im zyklischen Takt und nicht als Volumenstrom auf die Schwenkkolbenflächen 110, 115. Vorteilhaft ist, dass in den Depotkammern 117, 128 das unter Druck stehende Arbeitsmittel kurzfristig abgelagert wird und während der Lagerung im oberen Drittel des Arbeitsumfangs zwischen Druck- und Expansionsphase keine Arbeit abgerufen wird. Die Depotkammern 117, 128 sind somit auch Arbeitsenergiespeicher. Zusätzlich sind die radialen halbzylinder- oder keilförmigen Wände auch die vorderen Arbeitsflächen 115,115a der Schwenkkolben 104, 104a in der oberen Expansionskammer 106, 106a. Auf der Verdichterseite 107, 107a nehmen die axial ausgerichteten Depotkammern 117, 117a, 128, 128a das Arbeitsmittel auf, speichern es als Arbeitsvermögen ab.

Einen weitere vorteilhafte Möglichkeit ist dadurch gegeben, wenn die Arbeitsmittel im kalten flüssigen Zustand vorliegen, diese über die Regelstrecke dem Regelventil 96 zu einem vorbestimmten Anteil in die verdichtungsraumseitigen Depotkammern 117, 128 eingespritzt wird, dadurch wird der Verdichtungsvorgang effektiv gekühlt, es fällt weniger Verdichtungsarbeit an. Die Arbeitsmittel können auch bei diesem Arbeitsvorgang gemischt werden und somit als Mischgas arbeiten. Das in den Depotkammern 117, 128 eingespritzte flüssige Arbeitsmittel vergast unter Aufnahme von Wärme aus dem Arbeitsprozess, vermischt sich mit dem verdichteten gasförmigen Arbeitsmittel und erzeugt Druckenergie, die dann auf der Expansionsseite 106, 106a in mechanische Bewegungsenergie gewandelt wird.

So kann der Rotationsschwenkkolbenmotor 50 über die Depotkammern 117, 117a, 128, 128a mit mehreren Arbeitsmittel gleichzeitig arbeiten und das auch noch im flüssigen oder gasförmigen Zustand z.B. mit Luft, Stickstoff, Kohlendioxyd, Hydrauliköle, Alkohole und Wasser.

Das Arbeitsmittel Wasser wird über den Abgaswärmeaustauscher 74, 68 aus dem Verfahren 2 vorgewärmt und in den Depotkammern 117, 128 geregelt eingespritzt, das dann auf der Expansionsseite einteilig kondensierte Wasser wird über Wärmeaustauscher 56 und Kreislaufpumpe 95 zurück gefahren gem. Verfahren 2 nach Anspruch 6 bis 10.

Eine zweite Besonderheit gibt es, das die Motorgehäusewand 101 mit einem eingepressten Gleitringzylinder 113 aus einem Werkstoff, der besonders gute Gleitlaufeigenschaften besitzt, versehen ist. Der Hohlzylinder oder auch als Gleitringzylinder 113 bezeichnet, wird von einem zylinderförmigen Stützring 114 abgestützt und mit diesem drehmomentenfest mit der Gehäusewand 101 verbunden ist. Der Gleitring 113 ist ein Verschleißteil und kann vom Stützring 114 mechanisch getrennt werden und durch einen neuen ersetzt werden. Der Stützring 114 ist aus einer sehr wärmeleitfähigen Metalllegierung. Der Gleitringzylinder 113 und die Zylinderseitenteile 141 sind aus sehr gleitfähigen, abriebfesten und temperaturbeständigen Materialen, die von den Betriebsbedingungen des Rotationsschwenkkolbenmotors 50 bestimmt werden. Bei Trockenlauf des Rotationsschwenkkolbenmotors 50 sind die Materialien, Kohlenfaserkunststoffe mit Graphit-Einschlüsse, Teflon oder Keramik einzusetzen. Modernste Fertigungstechniken, Lasertechnik für Werkstoffoberflächenbehandlung können den Gleitring 113 und Stützring 114 ersetzen. Die Schwenkkolben 104, 104a bestehen aus Werkstoffen, die sich ergänzen mit den Materialien des Gleitringzylinders 114. Bei Betriebsbedingungen über 200° C werden warmfeste Metalllegierungen und Keramik eingesetzt und die Kolbenoberflächenkanten 111 aus hoch warmfesten Werkstoffen zusätzlich mit Laufplatten 183 verstärkt. Für die Kolbenführung 130, Kolbendichtungen 129, 185, 186 und Kolbenaufhängungen 131, 188 sind Werkstoffe der Dichtungs- und Führungsleisten 187 aus dem Stand der Technik bekannt.

Eine dritte Besonderheit ist die, das die Schwenkkolbenflächen 115, die in die Schwenkkolbenkammern 108 eintauchen, zur Vergrößerung ihrer Arbeitsflächen halbzylinderförmig, pfeil- oder keilförmig ausgebildet sind.

Eine vorteilhafte Ausführung ist die Anordnung zweier oder mehrerer Rotationsschwenkkolbenmotoren 50, 50a, deren drehschwingende gelagerten Leistungsteile, die Schwenkkolben 104, 104a, 104c, sich in einem bestimmten Bereich der Umfangsbewegung gegeneinander abstützen und so einen oder mehrere Vordruckarbeitsräume 160, 160a, 161 oder mehrere Expansionsräume 162, 163, 163a, 164, 164a, 164c bilden und durch einen Kreislaufprozess nach den Merkmalen des Verfahrens 2 nach den Ansprüchen 6 bis 10 angetrieben werden.

Der Volumenstrom des Arbeitsmittels wird in dem Arbeitsbereich auf der Expansionsseite 162, 163, 163a, 164, 164a in den oberen Arbeitskammern in mechanische Energie über die Schwenkkolbenflächen 115, 115a und dem Rotorradius ein gemeinsames sich adolierendes Drehmoment erzeugt. So ist das Drehmoment bei zwei Rotoren 102, 102a doppelt so groß, bei drei Rotoren 4mal so groß, wie bei einem Rotationsschwenkkolbenmotor. Besonders vorteilhaft ist die Arbeitsweise der unteren Kolbenarbeitskammern 108, 108a, 108b. Hier wird die Rotationsenergie aus der Summe der Fliehkräfte, der rotierenden Massenkräfte und die Expansionskraft des vorgespannten Arbeitsmittels und seine Wirkungen über die mit einer Drehachse 132, 133, 134 gelagerten Schwenkkolben 104, 104a,104b ein Drehmoment erzeugt. Das so erzeugte Antriebsdrehmoment arbeitet über die Exzentrizität 165 von Rotorachse 103 und Gehäusegleitring 113 in die Arbeitsdrehrichtung mit den Hebelarm des Rotorradius 102, 102a, 102b.

Auch dabei addieren sich die einzelnen Drehmomente zu einem großen Antriebsdrehmoment an den Motorwellen 103, 103a. Das Anfahrdrehmoment bei allen Rotationsschwenkkolbenmotoren ist in jeder Position des Rotors 102, 102a, 102b sehr hoch, somit läuft der Rotationsschwenkkolbenmotor auch unter Last aus dem Stillstand an und beschleunigt z.B. auch ein fahrendes Auto und seine Massen sofort, da der Motorantrieb eine geringe Rotationsmassenträgheit hat, die 40% weniger ist als die eines Elektroantriebs. Weiter Vorzüge sind das Abwürgdrehmoment, dass bis zu 30% über dem Startdrehmoment ist, den Motor und seine Bauteile vor der Zerstörung schützt.

Das Nenndrehmoment liegt bei 65% des Startdrehmoments und ist durch die doppelwirkenden arbeitenden Schwenkkolben 104 über einen weiten Drehzahlbereich konstant. Damit kann der Rotationsschwenkkotbenmotor 50, 50a ein Fahrzeug ohne ein Schaltgetriebe nur über die Druck- oder Drosselregelung 92, optimal und energieeffizient über seine Antriebswelle 53 bewegen, das gilt auch für die Stromerzeugung mit einem Generator 90.

Die Übertragung der Drehkräfte und der genaue Parallellauf der Schwenkkolbenrotoren 102, 102a, 102b, erfolgt über zwei gleichlaufende Zahnräder 166, 166a. Die obere Vordruckarbeitskammer 160, 160a wird in Drehrichtung mittig radial über ein optimalen strömungsmechanisch ausgelegten Strömungsverdichter 167 mit dem vorgespannten Arbeitsmittel belegt, die unteren Arbeitskammern 108, 108a durch die Zylinderdecke 142, 142a und Zylinderscheiben 141, 141a, führende Bohrungen 121, 122, 121a, 122a und Kanäle 146, 147, 146a, 147a, axialen Depotkammern 117,117a in den Rotorkörpern 102, 102a.

Das vorgespannte Arbeitsmittel fährt wie oben beschrieben mit seinem Volumenstrom durch einen Strömungsverdichter 167 über einen Druckverteiler 168 in die Vordruckarbeitskammer 160, 160a, 161. In der Vordruckkammer 160, 160a, 161 wirken zwei Schwenkkolben 104, 104a mit ihren vorderen Schwenkkolbenflächen 115, 115a in Drehrichtung der Rotoren 102, 102a und zwei bogenförmige Kolbenflächen 109, 109a, die tangential mit den Rotoren 102,102a wirken und bauen einen Arbeitsmitteldruck auf.

Die sich gegenseitig abstützenden Kolben 104, 104a erzeugen durch den Parallellauf keine Reibungsarbeit und bilden im Scheitelpunkt der Umfangsbewegung mit den Gehäusewänden 101, 101a, 114, 114a, 113, 113a und in Drehrichtung vor ihnen laufenden Schwenkkolben 104, 104a eine Druckkammer 162 mit hoher potentieller Druckenergie auf. Diese Druckenergie wird in Drehrichtung der Rotoren 102, 102a in mindestens 4 bis 6 Expansionskammern 163, 164, 164a mechanische Bewegungsenergie umgewandelt.

Für eine vorteilhafte Anwendung des parallellaufenden Rotationsschwenkkolbenmotors 50, 50a mit konzentrischer Anordnung der Rotorachsen 103, 103a zu dem Motorzylinder 101, 101a sind die Schwenkkolben 104, 104a mit Laufplatten 183, 183a aus starken dauermagnetischen Werkstoffen (Dauermagneten) versehen und so angeordnet, dass die gleichnamigen Pole sich gegenüberliegen, aber die Laufplatten 183, 183a sich selbst nicht berühren können.

Die Schwenkkolben 104, 104a rollen über eine leicht verzahnte Kolbenbogenfläche 179, 179a gasdicht ab. Das Magnetfeld wirkt auf der Expansionsseite 162, 163, 163a abstoßend, auf der Vordrucksseite 161 160, 160a anziehend und neutralisieren die wirkenden Kräfte im Arbeitsbereich 161 auf 162 in Drehrichtung durch die magnetische Anziehungskraft auf die sich parallellaufenden Schwenkkolben. Im Arbeitsbereich 162 wirken die magnetischen Feldlinien gleichpolig und stoßen sich ab, dabei entsteht ein Drehmoment auf die Rotorachsen 103, 103a.

Das Motorgehäuse 101, 101a ist aus nicht magnetischen Materialien, Keramik, Hart-, Kohlefaser- und Glasfaserkunststoffe, so auch der Rotor 102, 102a und die Schwenkkolben 104, 104a, zusätzlich ist das magnetische Feld über die Werkstoffplatte 200, 200a zum Motorgehäuse 101, 101a abgeschirmt.

Um Wärmeenergie zu erzeugen, ist ein Gleit- und Reibkörper 199, 199a aus einer wärmeleitfähigen selbstschmierenden Werkstoffkombination im Arbeitsbereich 162, 162a angeordnet, der auch im vorderen Drittel des Arbeitsbereiches 162, 162a die magnetischen Feldlinien des Magnetfeldes nicht passieren lässt. In Fig. 17 ist die Anordnung schematisch gezeichnet.

Bei der konzentrischen Anordnung der Rotorachsen 103, 103a wirkt der Expansionsdruck des Arbeitsmittels in der unteren Schwenkkolbenkammer 108 über die Schwenkkolbenflächen 110, 110a, dem Schwenkkolbenradius 118 und erzeugt ein Drehmoment im Expansionsbereich 162, 163, 163a. Geregelt wird der Expansionsdruck über den Einlass 123 und der Depotkammer 117 und dem Auslass 125. Im Scheitelpunkt 162 erzeugt die Rotationsenergie einen hohen Druckimpuls in der Schwenkkolbenkammer 108, dieser erzeugt im Expansionsbereich 163, 163a über die Tangente der parabelförmigen Laufbahn der Schwenkkolben 104, 104a an den Rotorachsen 103, 103a ein sehr hohes Drehmoment, das nun noch unterstützt und addiert wird, zu dem erzeugten Drehmoment der oberen Schwenkkolbenkammer 162 über die Schwenkkolbenflächen 115 und der Depotkammer 128 und dem magnetischen Moment der Laufplatten 183, 183a im Arbeitsbereich 162.

Eine andere vorteilhafte Ausführung ist die Anordnung von zwei Rotationsschwenkkolbenmotoren 50, 50a, deren Arbeitsdrehrichtung gegenläufig ist. Das Arbeitsmittel wird hier beidseitig über je einen Strömungsverdichter 170, 171 eingefahren. Das vorgespannte Arbeitsmittel, das beidseitig über je einen Druckverteiler 172 geführt wird, treffen in der zylinderförmigen Dossierkammer 174 aufeinander. Dabei erhöht sich Druck und Temperatur des Arbeitsmittels, die Strömung kommt zum Stehen, weil die Schwenkkolben 104, 104a, 104b mit ihren Bogenradiusflächen 109, 109a und die Rotorenradiusbögen 173, 173a, die Einlassöffnungen 175, 176 zu den beiden oben liegenden Arbeitskammern 163, 163a verschließen. Dreht der Rotor in Arbeitsrichtung weiter, geben die beiden Schwenkkolben 104, 104a die Einlassöffnungen 175, 176 frei. Das Arbeitsmittel strömt jetzt Gehäusewänden 101, 101a, 114, 114a, 113, 113a und in Drehrichtung vor ihnen laufenden Schwenkkolben 104, 104a eine Druckkammer 162 mit hoher potentieller Druckenergie auf. Diese Druckenergie wird in Drehrichtung der Rotoren 102, 102a in mindestens 4 bis 6 Expansionskammern 163, 164, 164a mechanische Bewegungsenergie umgewandelt.

Für eine vorteilhafte Anwendung des parallellaufenden Rotationsschwenkkolbenmotors 50, 50a mit konzentrischer Anordnung der Rotorachsen 103, 103a zu dem Motorzylinder 101, 101a sind die Schwenkkolben 104, 104a mit Laufplatten 183, 183a aus starken dauermagnetischen Werkstoffen (Dauermagneten) versehen und so angeordnet, dass die gleichnamigen Pole sich gegenüberliegen, aber die Laufplatten 183, 183a sich selbst nicht berühren können.

Die Schwenkkolben 104, 104a rollen über eine leicht verzahnte Kolbenbogenfläche 179, 179a gasdicht ab. Das Magnetfeld wirkt auf der Expansionsseite 162, 163, 163a abstoßend, auf der Vordrucksseite 161 160, 160a anziehend und neutralisieren die wirkenden Kräfte im Arbeitsbereich 161 auf 162 in Drehrichtung durch die magnetische Anziehungskraft auf die sich parallellaufenden Schwenkkolben. Im Arbeitsbereich 162 wirken die magnetischen Feldlinien gleichpolig und stoßen sich ab, dabei entsteht ein Drehmoment auf die Rotorachsen 103, 103a.

Das Motorgehäuse 101, 101a ist aus nicht magnetischen Materialien, Keramik, Hart-, Kohlefaser- und Glasfaserkunststoffe, so auch der Rotor 102, 102a und die Schwenkkolben 104, 104a, zusätzlich ist das magnetische Feld über die Werkstoffplatte 200, 200a zum Motorgehäuse 101, 101 a abgeschirmt.

Um Wärmeenergie zu erzeugen, ist ein Gleit- und Reibkörper 199, 199a aus einer wärmeleitfähigen selbstschmierenden Werkstoffkombination im Arbeitsbereich 162, 162a angeordnet, der auch im vorderen Drittel des Arbeitsbereiches 162, 162a die magnetischen Feldlinien des Magnetfeldes nicht passieren lässt. In Fig. 17 ist die Anordnung schematisch gezeichnet.

Bei der konzentrischen Anordnung der Rotorachsen 103, 103a wirkt der Expansionsdruck des Arbeitsmittels in der unteren Schwenkkolbenkammer 108 über die Schwenkkolbenflächen 110, 110a, dem Schwenkkolbenradius 118 und erzeugt ein Drehmoment im Expansionsbereich 162, 163, 163a. Geregelt wird der Expansionsdruck über den Einlass 123 und der Depotkammer 117 und dem Auslass 125. Im Scheitelpunkt 162 erzeugt die Rotationsenergie einen hohen Druckimpuls in der Schwenkkolbenkammer 108, dieser erzeugt im Expansionsbereich 163, 163a über die Tangente der parabelförmigen Laufbahn der Schwenkkolben 104, 104a an den Rotorachsen 103, 103a ein sehr hohes Drehmoment, das nun noch unterstützt und addiert wird, zu dem erzeugten Drehmoment der oberen Schwenkkolbenkammer 162 über die Schwenkkolbenflächen 115 und der Depotkammer 128 und dem magnetischen Moment der Laufplatten 183, 183a im Arbeitsbereich 162.

Eine andere vorteilhafte Ausführung ist die Anordnung von zwei Rotationsschwenkkolbenmotoren 50, 50a, deren Arbeitsdrehrichtung gegenläufig ist. Das Arbeitsmittel wird hier beidseitig über je einen Strömungsverdichter 170, 171 eingefahren. Das vorgespannte Arbeitsmittel, das beidseitig über je einen Druckverteiler 172 geführt wird, treffen in der zylinderförmigen Dossierkammer 174 aufeinander. Dabei erhöht sich Druck und Temperatur des Arbeitsmittels, die Strömung kommt zum Stehen, weil die Schwenkkolben 104, 104a, 104b mit ihren Bogenradiusflächen 109, 109a und die Rotorenradiusbögen 173, 173a, die Einlassöffnungen 175, 176 zu den beiden oben liegenden Arbeitskammern 163, 163a verschließen. Dreht der Rotor in Arbeitsrichtung weiter, geben die beiden Schwenkkolben 104, 104a die Einlassöffnungen 175, 176 frei. Das Arbeitsmittel strömt jetzt in die Expansionskammer 163, 163a und belegt gleichzeitig zwei Kolbenvorderflächen 115, 115a mit dem vorher erhöhten Druck des Arbeitsmittels.

Das ergibt ein hohes Druckverhältnis zwischen dem Arbeitsdruck in der axialen zylinderförmigen Dossierkammer 174 und dem Ablassdruck oder auch je nach Regelung dem Arbeitsenddruck auf der Expansionsseite in den Expansionskammern 163, 163a, 164, 164a der beiden Rotationsschwenkkolbenmotoren 50, 50a.

Die thermodynamische polytrope Arbeitsweise ist eine Druckimpulsarbeit, vergleichbar mit einem Hubkolbenmotor, aber ohne ein 2 oder 4-Taktsystem, ohne oszillierende Massen und Schwingungen, einfach kreisförmig mit großem Hebelarm und mit sehr geringem Massenträgheitsmomenten belastet. Eine gegenläufige Schwenkkolbenmotoreinheit 50, 50a mit zwei Rotationsschwenkkolbenmotoren hat bis zu 16 (sechszehn) Expansionsarbeitskammern 163, 163a, 164, 164a, 108, 108a, 108b und erzeugt ein zweifach höheres Drehmoment mit hälber Drehzahl und dem gleichem Schluckvolumen einer vergleichbaren parallelarbeitenden Motoreinheit 50, 50a.

Auf den Motorwellen 103, 103a sind Zahnräder 166, 166a drehmomentfest gelagert, die in ein Umlaufzahnrad 177 greifen, das in der Mitte drehmomentfest mit der Hauptantriebswelle 178 verbunden ist. Von den Motorwellen 103, 103a können so auch eine links- und rechtsdrehende Arbeitsdrehrichtung abgegriffen werden ohne das die Rotoren 102, 102a ihre Drehrichtung ändern müssen.

Die Bauweise des Rotationsschwenkkolbenmotors 50 ist kompakter, das Leistungsgewicht, der benötigte Einbauraum geringer, das Anlaufdrehmoment höher und bei Überlastung in allen Drehzahlbereichen robuster und flexibler als ein Elektromotor.

Der Rotationsschwenkkolbenmotor 50 ist besonders vielseitig in seinen Anwendungen, denn er kann betrieben werden als Antriebsmotor, als Pumpe und als Verdichter. Über die unteren Druckarbeitskammern 108, 108a und den Einlässen 121, 122, 120, 119, 123 kann die Abtriebsdrehrichtung geändert werden, in Links- oder Rechtsläufer Motor.

Durch einfaches Verändern des Volumenstroms bzw. des Drucks des Arbeitsmittels lassen sich die Drehzahl und das Drehmoment ohne besonderen Aufwand weiten Grenzen verstellen. Eine einfache Anpassung des Rotationsschwenkkolbenmotors 50 an die Arbeitsmaschine ist dadurch gegeben. Ohne Gefahr mechanischer Beschädigungen kann der Rotationsschwenkkolbenmotor 50, 50a reservierend betrieben werden. Durch seinen Überdruck im Arbeitsraum 105, 106, 107 kann er in explosionsgefährdeten Räumen, heißen Umgebungen oder stark verschmutzten Arbeitsräumlichkeiten arbeiten.

Mit diesen technischen Vorzügen eignet sich der Rotationsschwenkkolbenmotor 50 besonders als Antriebsmotor für alle mobilen Fahrzeuge, denn der Rotationsschwenkkolbenmotor kann gleichzeitig oder im Wechsel als Motor oder Verdichter betrieben werden. Hier ist besonders vorteilhaft, das nach dem verfahrensgemäßen Anspruch die Rückgewinnung aller anfallenden Massenträgheitsmomente und ihre Wirkungen eines fahrenden, eines verzögernden Fahrzeuges in Form von thermischer und potentielle Druckenergie wandelt und dieses dann als Arbeitsvermögen in einen Druckgasspeicher 37 fährt und zwischenspeichert. Aus diesem Druckgasspeicher 37 wird dann sofort das Arbeitsvermögen des Arbeitsmittels bei Bedarf in den Kreislaufprozess geregelt zurück gefahren.

Der Rotationsschwenkkolbenmotor 50 kann durch die Heizkammer 182 auf der Expansionsseite 112 über einen Wasser- oder Ölkreislauf mit thermischer Energie, in seinen polytropen Arbeitsprozess unterstützt werden. Auf der Verdichterseite 107 wird der Arbeitsprozess über die Kühlkammer 181 gekühlt. Die Zylinderdeckel 142 werden mit Maschinenschrauben 191 an die Gehäusewand 101 fest angeschraubt. Eine elastische, thermische belastbare Zylinderdeckeldichtung 139 zwischen Zylinderdeckel 142 und dem Seitenteil 141 hält eine betriebssichere Arbeitsdistanz bei einer vorbestimmten Arbeitstemperatur ein. Über die Ölkanäle 192 können die beweglichen Arbeitsteile geölt werden.

Ziel dieser Erfindung ist es, ein Verfahren zur Gewinnung von natürlichen umweltfreundlichen Arbeitsmitteln, zusätzlich den primären Energieträger Strom zu speichern, die Arbeitsauslastung des Elektrokraftwerkes zu verbessern und Elektrokraftwerke unabhängig von Brennstoff umweltfreundlich, ökologisch und ökonomisch zu betreiben. Der effektive Wirkungsgrad der des Umwandlungsprozesses liegt bei Strom zum Arbeits- und Speichermittel ist 81% und ist vergleichbar mit dem eines Wasserspeicherkraftwerkes.

Die Herstellung der Arbeitsmittel soll kostengünstig, technisch durchführbar, dezentral, vielseitig, zuverlässig, unabhängiger von Rohstoffe, keine gesundheitsgefährdende Substanzen, explosionsfrei und auch frei von zusätzlichen Umweltbelastungen sein. Die regenerativen Energiequellen wie Wind, Wasser Biomasse, Geothermie und Photovoltaik sind zu kostbar, um nur für die mobile Anwendung verheizt und verbrannt zu werden.

Vorteilhaft ist es, das Arbeitsmittel in Tanks gespeichert werden können und somit über diese Energiespeicher eine flexible ökonomische und ökologische Energiewirtschaft entsteht.

Gelöst wird diese Aufgabe durch das 1. Verfahren auch Anspruch 1 bis 5, in dem aus den Verbrennungsabgasen von Elektrokraftwerken, Heizkraftwerken und Industrieanlagen über die Wärmerückgewinnungs-, die Kühl-, Filter-, molekulare Trennungs- und Gasverflüssigungstechnik, die Arbeitsmittel Luft, Stickstoff, Sauerstoff und Kohlendioxyd gewonnen wird. Das Arbeitsvermögen (die Energie) bei den oben genannten Arbeitsmitteln liegt zwischen 615 bis 636 kj/kg bei einer Umgebungstemperatur von 15° C. Die Kältemenge von 1 kg Trockeneis CO₂ bezogen auf 1 kg Wassereis ist 1,9fach höher. Die Gewinnung und Speicherung der Arbeitsmittel kann auch alternativ flächendeckend mit effektiv arbeitenden mehrstufen Kompressoren oder mit Gasverflüssigungsanlagen mit Elektroantrieben über den primären Energieträger Strom zusätzlich erfolgen.

Strom ist der qualitativste und effektivste auf der Welt vorhandene Energieträger, der aus vielen Energiequellen gewonnen werden kann. Die Lebensqualität der Menschheit und das wirtschaftliche Wachstum ist mit dem Energieträger Strom unzertrennlich verbunden. Der Strom ist der Energieträger der Zukunft. Aus Strom und schon bei seiner Erzeugung anfallende Abwärme und Gase zu nutzen über die Energiespeichertechnik ist ökologisch und ökonomisch sinnvoll und eine positive Herausforderung an die Energiewirtschaft. Der vorgeschlagene Lösungsweg in Fig. I schematisch gezeichnet und zeigt das 1. Verfahren nach Anspruch 1 mit einem Ausführungsbeispiel auf.

Aus dem Verbrennungskessel 1 werden die Verbrennungsabgase in die Abgaswärmenutzung 2 geschickt, von dort werden die Abgase in der Abgasreinigung 3 gefahren. Die in der Abgasreinigung gefilterten Verbrennungsabgase werden über den Kühlturm 4 in die Luft geleitet und belasten, verändern mit den Schadstoffen und vor allem dem Treibhausgas Kohlendioxyd das Umweltklima. Nach dem Verfahren nach Anspruch 1 wird das gefilterte und gekühlte Verbrennungsabgas aus der Kühlturmspitze über eine Abscheidersaugvorrichtung 5 durch die Saugrohrleitung 6 durch den Unterdruck in den Rotationsschwenkkolbenkompressor 6 gefahren. Die Kompressionsanlage 6 drückt das Abgas durch eine hocheffektiv arbeitende Gasfilter- und Gaszerlegungsanlage 7. Schadstoffe und giftige Gase wie Kohlenmonoxyd, Benzole, Aerosole, Stickoxide, Schwefeldioxyd ust. werden abgetrennt von den beiden Hauptabgaskomponenten Stickstoff und Kohlendioxyd. Stickstoff und Kohlendioxyd werden getrennt in eine Gasverflüssigungsanlage 8 gefahren. Die verflüssigten Gase werden in kaltisolierten Tanks 9 gefahren und dort gespeichert. Aus den Tanks 9 werden die flüssigen Arbeitsmittel über Rohrleitungen 10, Tankcontainer 11 und Tankwagen 12 an die Tankstellen 13 verteilt und dort über eine sichere Tanktechnik an die Verbraucher 14 verkauft.

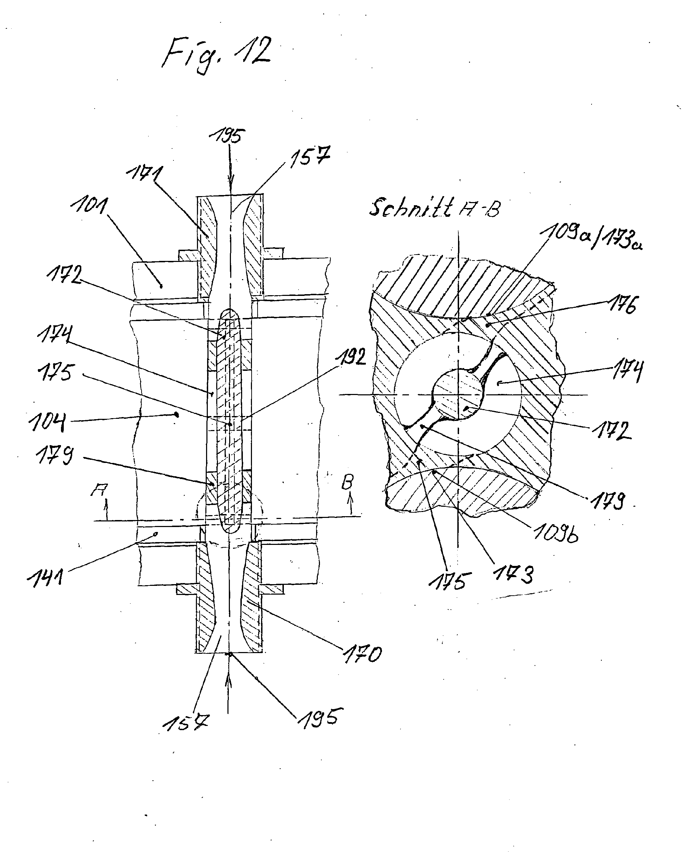

Zusätzlich werden die Tankstellen 13 die flüssigen Arbeitsmittel Stickstoff und Kohlendioxyd mit flüssigen Sauerstoff oder Pressluft aus der Kompressoranlage 15 und über die Gasdruckmischstation 16 angereichert und es entsehen somit auch kontrollierte Brennmedien, die eine saubere, wirtschaftliche und geregelte Oxydation der festen, flüssigen und gasförmigen Biomasse fördern. Das Arbeitsmittel wird als Druckgasgemisch mit 200bar bis 450bar vorgespannt und eine Temperatur von -60° C - 30° C haben. Das Arbeitsmittel Kohlendioxyd steht dazu als eine Alternative, in flüssiger oder in fester Substanz, aufbereitete, als Trockeneis in Pelletsform in der Trockeneisanlage 17 zur Verwendung. Alle oben genannten Arbeitsmittel können mit den Merkmalen des 2. Verfahrens Fig. 2 nach den Ansprüchen 6 bis 10 ihre Energie in fünf Energieerscheinungsformen wandeln, somit kann das Elektrokraftwerk aus den Speichertanks 9 das Arbeitsmittel über die Abwärmenutzung 2 in eine Expansionsturbine 18 oder Rotationsschwenkkolbenmotor 18 bei Spitzen- oder Sekundenlastanfall über den dazu geschalteten Generator in Strom zurückwandeln. Eine folgenrichtige Lösung der Aufgabe zum optimalen Betrieb eines oder mehrerer Rotationsschwenkkolbenmotoren wird mit den Merkmalen der Patenansprüche 6 bis 10 erreicht. Mit der schematischen Zeichnung Figur 2 sind die einzelnen Verfahrenschritte hinsichtlich der Betriebsweise gezeichnet.

Die Arbeitsmittel Luft und Stickstoff können alternativ im gasförmigen oder flüssigem Zustand, das Arbeitsmittel Kohlendioxyd in flüssigem oder im festen Zustand (Trockeneis) in Tanks 20, 21 gespeichert werden. Der Speicherdruck der gasförmigen Arbeitsmittel Luft, Stickstoff ist bis zu 450bar die Speichertemperatur bis -60° C, im saturiertem flüssigem Zustand beträgt die Speichertemperatur bis minus 160° C. Der Speicherdruck für das Kohlendioxyd ist im flüssigem Zustand 20bar, die Speichertemperatur -30° C, im festem Zustand in Form von Trockeneis ist der Speicherdruck maximal 15bar, bei einer Arbeitstemperatur von minus 55° C.

Bei einem 100l Tankvolumen der Tanks 20, 21 sind dann an Arbeitsmasse bei:
Stickstoff und Luft im gasförmigen Zustand im Mittel 70kg
saturiertem flüssigen Zustand im Mittel 85kg
Kohlendioxyd im flüssigem Zustand im Mittel 112kg
im Trockeneis im Mittel 115kg

Die mittlere Kälteleistung, die im System getrennten Porenwärmertauscher 24 über die Volumenstrom- und Druckregeleinheit 22 und dem Expansionsventil 23 anfällt, ist für das Arbeitsmittel:

| | |
|---|---|
| gasförmiger Luft und Stickstoff | 11 KWh |
| saturiertem flüssiger Luft und Stickstoff | 14KWh |
| flüssigem Kohlendioxyd | 19KWh |
| festem (Trockeneis) | 20KWh |

Um 1 KWh Kälteleistung über dem Verbrennungsmotor und eine Klimaanlage zu erzeugen, verbrennt man heute 0,7I Benzin oder 0,61 Diesel, dabei entstehen außer den Schadstoffen 1,7kg Kohlendioxyd. Das bedeutet im Ergebnis, das bereits im zweitem Verfahrensschritt eine Kohlendioxydsenke von Arbeitsmittel Luft und Stickstoff, 19kg - 24kg, beim Arbeitsmittel Kohlendioxyd 32kg - 36kg ist. Luft und Stickstoff haben in dem Porenwärmetauscher 24, der effektiv über einen Porenkörper 25 Kälteleistung an die Verbraucher 27 über einen Wasser/Glykol Arbeitskreislauf 26 abgibt, eine Betriebstemperatur von -20° C und einen Betriebsdruck bis 14,5bar, das Kohlendioxyd hat eine Betriebstemperatur von bis zu -30° C, bei einem Betriebsdruck von bis zu maximal 35bar. Das Kohlendioxyd in Pallets- oder Granulatform (z.B. 9mm ∅ + 10-30mm lang) wird über Tankfüllstutzen 95 automatische gefüllt. Über das Druckregelventil 97, den Verdampfer 98 und dem drei/zwei Wegeventil 99 wird der Druck in den Speichertanks 20, 21 geregelt gefahren.

Die Energie für den Verdampfungsdruck bei den flüssigen Arbeitsmitteln und den Sublimationsdruck für das Trockeneis kommt kostenlos und umweltfreundlich aus der Umgebungsluft, die den Verdampfer 98 außen zwangsweise umströmt. Diese Umgebungsenergie, aus der Umgebungstemperatur, macht bis zu 12% der mechanischen Bewegungsenergie aus, die am Verfahrensende gemäß den Merkmalen des 2. Verfahrens nach dem Anspruch 6 bis 10 gewonnen wird.

In dem dritten Verfahrensschritt erfolgt die Wärmerückgewinnung aus dem Arbeitsmittel, das in den Kreislaufprozess, bei 3bär - 6bar und einer Betriebstemperatur im Mittel von 150° C, in einem Rohrbündelgegenstromwärmetauscher 28 dreifachsystemgetrennt gefahren wird. Hierbei wird das Arbeitsmittel aus dem Kreislaufprozess isobar auf 15 bis 40° C gekühlt und das aus den Speichertanks 20, 21 zugefahrene Arbeitsmittelauf 100° C erwärmt und erhöht somit die Exergie und gleichzeitig werden Energieverluste vermieden. Unterstützt wird der Kühlprozess von einem Heizungswasserkreislauf 29 im Gegenstromverfahren. Das Arbeitsmittel im Kreislaufprozess vermindert seinen Volumenstrom um 30% bei gleichen Massenstrom. Damit fällt bei dem Verdichter 31 30% weniger Verdichtungsarbeit an. Die Vorteile sind Exergieerhöhung für das (anteilmäßige 5 - 20% vom Kreislaufmassenstrom) zuzufahrende Arbeitsmittel und bis zu 30% weniger Verdichtungsarbeit für den Verdichter 31.

Für das Arbeitsmittel Kohlendioxyd gibt es andere Betriebsbedingungen. Die Merkmale sind:
der Betriebsdruck ist bis zu 6fach höher, die Betriebstemperatur bis zu 60% niedriger, der anteilmäßige Volumenstrom für den zuzufahrenden Anteil ist 60% niedriger als der/die von den Arbeitsmitteln von Luft und Stickstoff. Der Verbrauch von den Arbeitsmitteln Kohlendioxyd ist somit bei einem gleichwertigem effektiven Wirkungsgrad von 80%, um 60% geringer als bei Luft- und Stickstoffbetrieb.

Als Beispiel: ein Auto 1500kg verbraucht im Stadtverkehr für 100km

**Treibhausgas**

| | |
|---|---|
| 10 Liter Benzin entsprechen | 24kg CO₂ |
| 8 Liter Diesel entsprechen | 21 kg CO₂ |
| 10 Liter Stickstoff entsprechen | 0kg CO₂ |
| 10 Liter Luft entsprechen | 0kg CO₂ |
| 4,5 Liter Kohlendioxyd entsprechen | 5kg CO₂ |

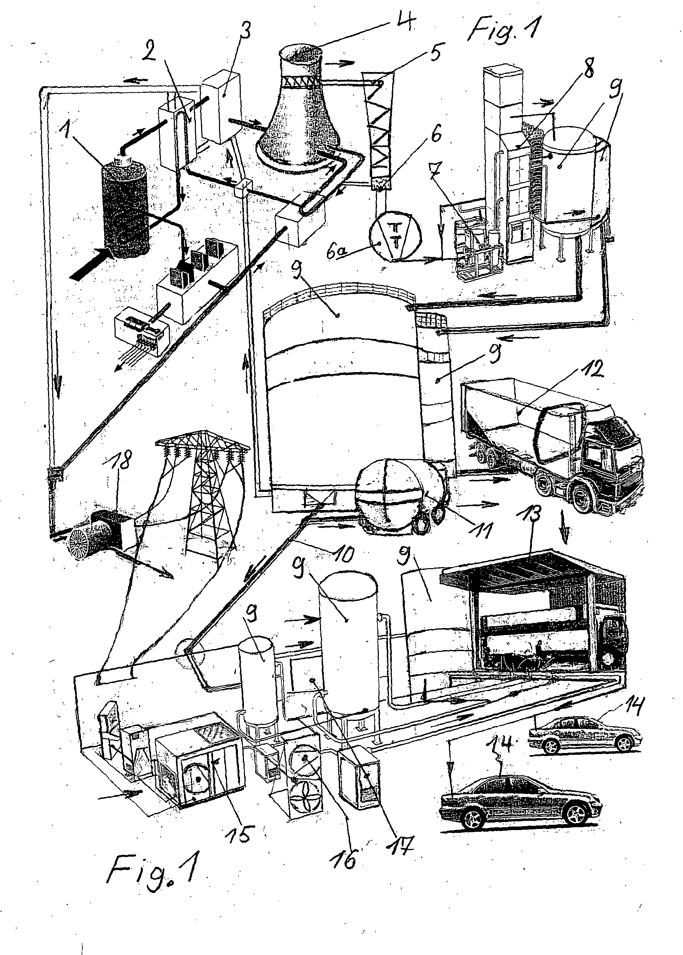

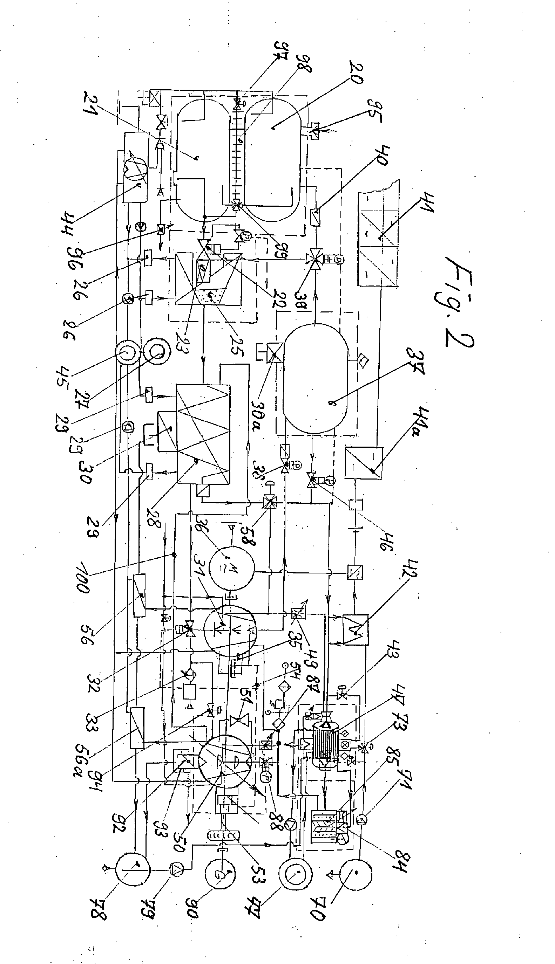

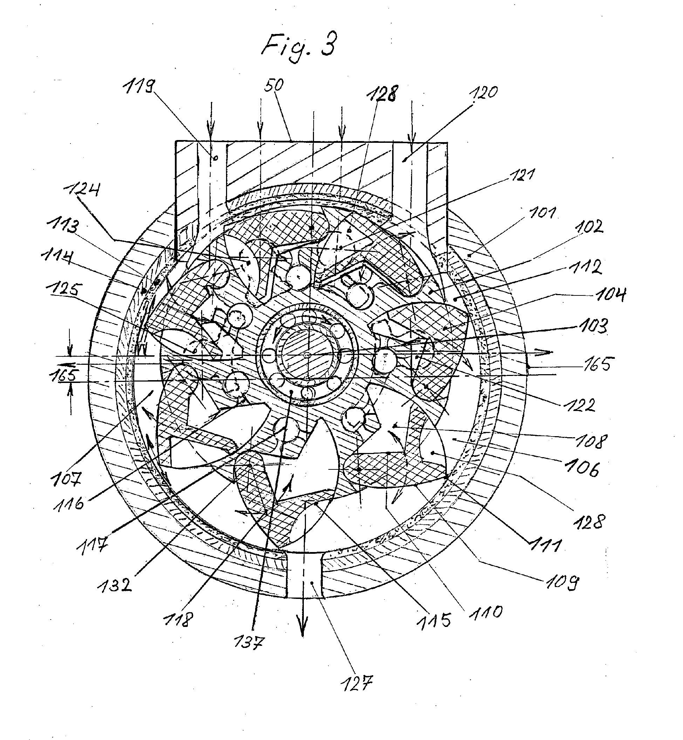

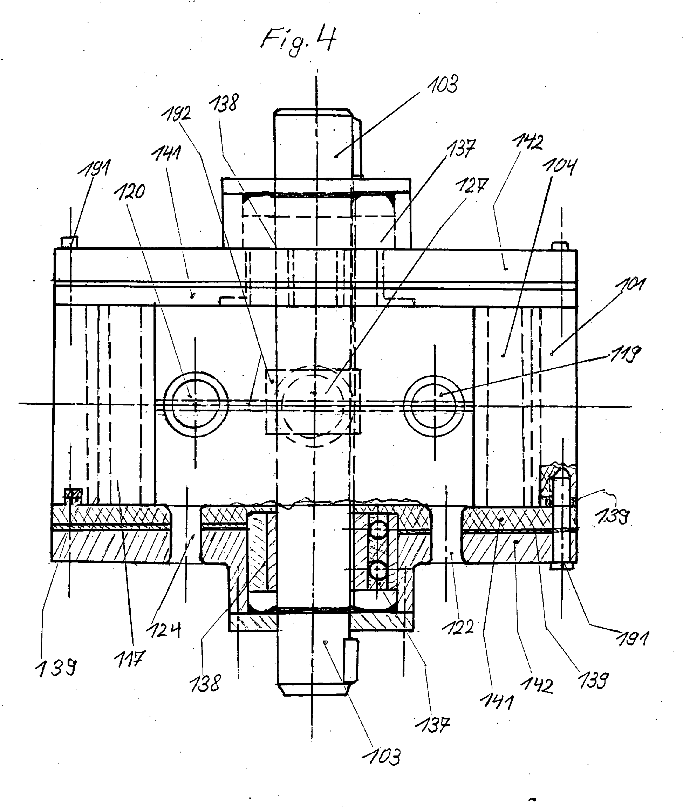

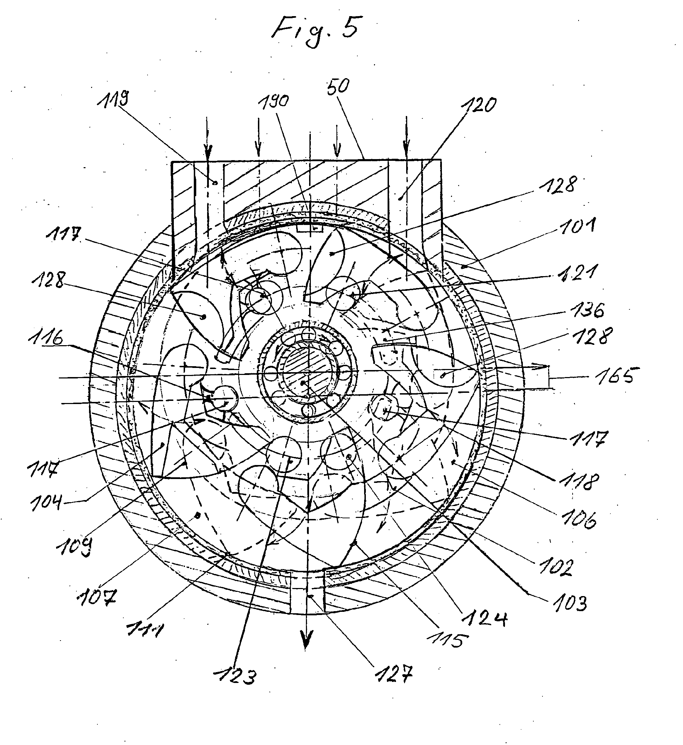

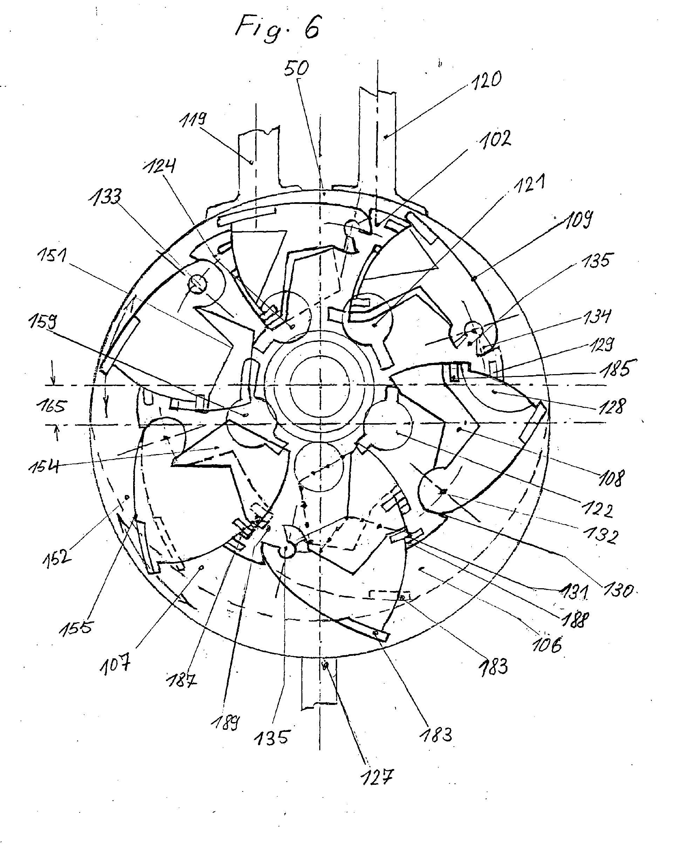

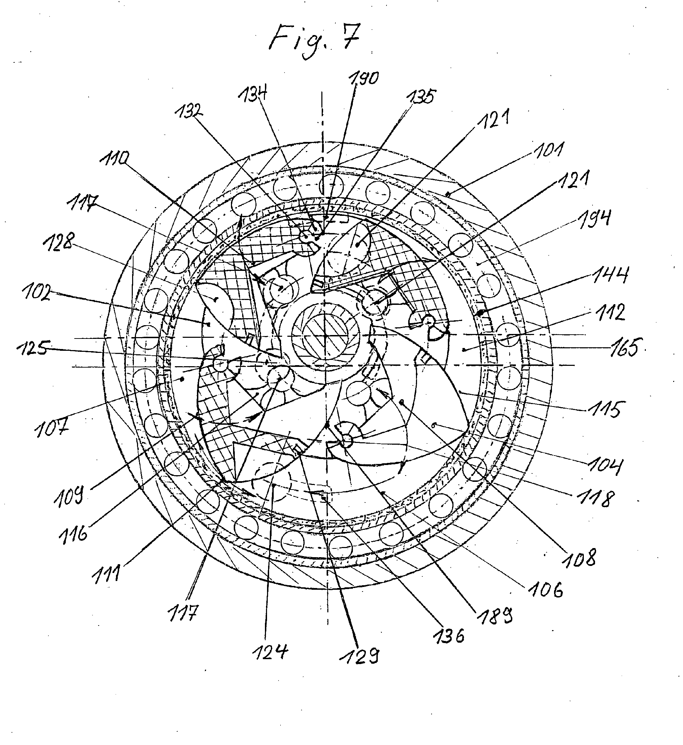

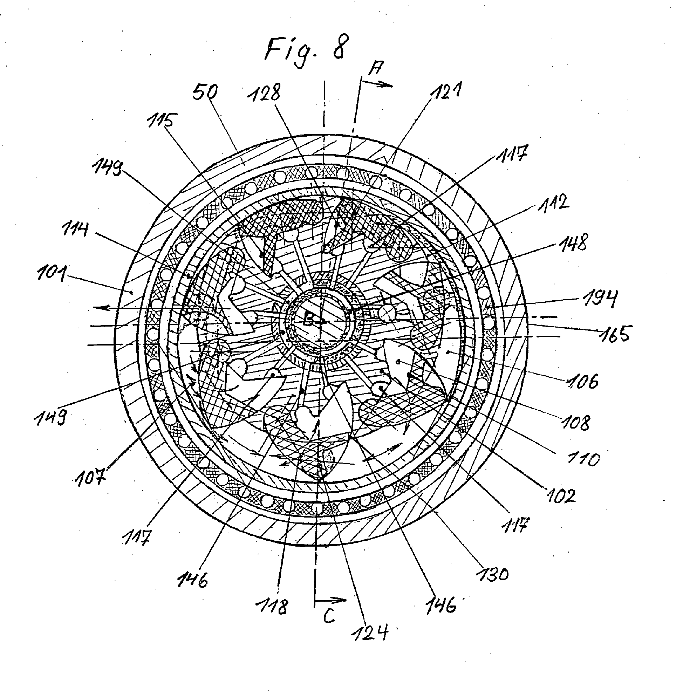

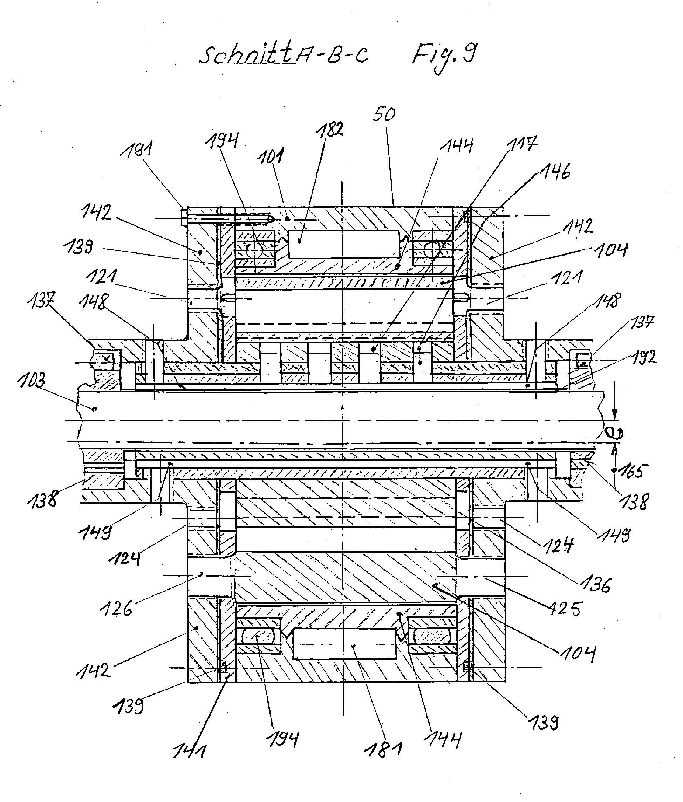

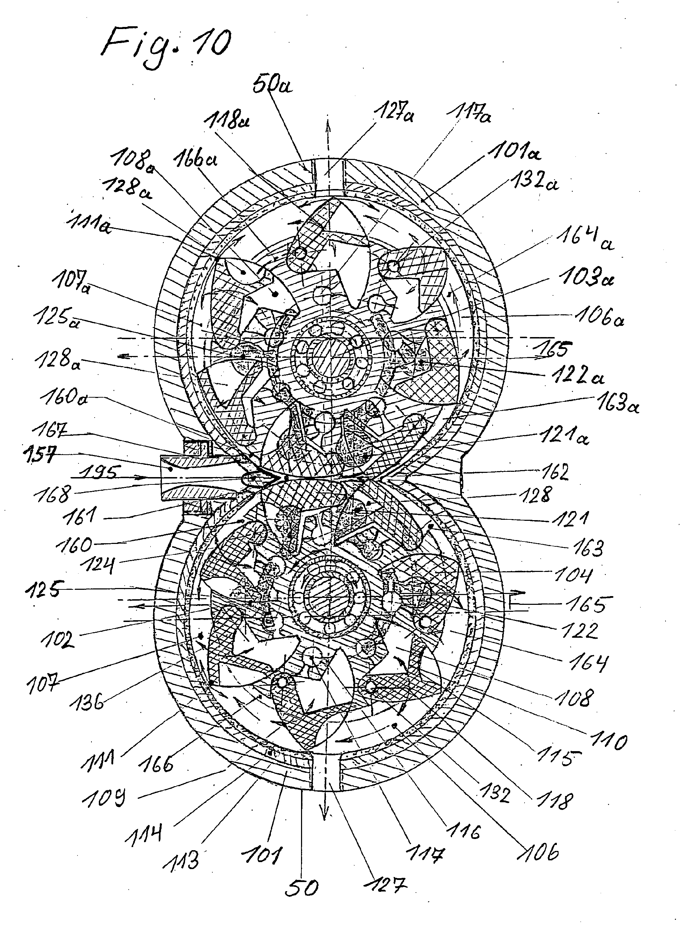

Da aber das Arbeitsmittel Kohlendioxyd vorher aus den Verbrennungsgasen des Kraftwerkes gemäß dem 1. Verfahren Fig. 1 mit den Merkmalen nach dem Patentanspruch 1 bis 5 gewonnen werden, ist die Treibhausgasbelastung gleich Null.

| | | | |
|---|---|---|---|
| also | 5kg CO₂ - | 5kg CO₂ | = 0kg CO₂ |
| | Antrieb | Gewinnung | = Belastung |

Mit dem zusätzlichen großen Vorteil, dass die Schadstoffbelastung von bis zu 400 verschiedeneren Schadstoffen wie Russ, Benzole, Aerosole, Kohlenmonoxyd, Stickoxyde, Kohlenwasserstoffe alle auch der Gesundheit schaden, entfallen nach den Merkmalen des Verfahrens 1 und 2 mit den Ansprüchen 1 bis 10 sind ebenfalls gleich Null. Zusätzlich kann das Kohlendioxyd in der Abscheider- und Drosseleinheit 30 als Arbeitsmittel in flüssiger oder fester Form bis zu 70% zurückgewonnen werden. Der effektive Wirkungsgrad des Rotationsschwenkkolbenmotors fällt dabei und setzt der Rückgewinnung wirtschaftliche Grenzen. Bei großen stationären Anlagen z.B. bei Schiffsmotoren, Lokomotiven und Lastkraftwagen von 20 Tonnen aufwärts ist diese zusätzliche Investition ein Muss/sinnvoll.

Der Verdichter 31 mit seiner zweistufigen Arbeitsweise besteht aus drei einzelnen Rotationsschwenkkolbenverdichtern 31, die in Reihe geschaltet sind. Die Ventileinheit 35 schaltet die einzelnen Stufen über drei Regelventile und so wirkt die Verdichtung wie eine elastisch geregelte Verzögerung.

Das Arbeitsmittel erhält er mit einem Vordruck von 3 - 6bar aus dem Gegenstromwärmetauscher 28 über die dritte Regelstrecke mit dem Regelventil 32 im Nennlastbereich. In der Rekuperationsphase und bei der Speicherung aus der sechszehnten Reglestrecke mit dem Regelventil 32 über den Filter 33 und den Abscheider 34.

Die Verdichtung kann über eine Stufe, zwei Stufen oder drei Stufen erfolgen. So arbeitet der Verdichter im Nennlastbereich einstufig, im Spitzenlast- und Rekuperationsbetrieb (Bremsenergie) zweistufig und ergänzend dreistufig im Speicherbetrieb. Auch kann der Verdichter 31 das Arbeitsmittel Luft über den Elektromotor 36 und dem Energiemedium Strom in den Zwischenspeichertanks 37 über die dreizehnte Regelstrecke mit dem vierten Druckventil 38 bei einem Speicherdruck von bis zu 200bar abspeichern. Der Tank 37 ist wärmedämmend isoliert und ist zusätzlich über die vierzehnte Regelstrecke mit dem ersten 3/2-Wegedruckventil 39 und dem Rückschlagventil 40 mit den Hauptspeichertanks 20, 21 verbunden, damit ist auch ein Kreislauf im Arbeitsfließprozess möglich.

Der Strom kann über das vorhandene Stromnetz bezogen werden oder über regenerative Energiequellen wie Photovoltaikanlagen 41 oder der Brennstoffzelle 42 erzeugt werden. Je nach der Arbeitsweise der Brennstoffzelle wird die Abwärme der Oxydation in den Kreislaufprozess über die Rohrleitungen 34 gefahren. Besonders verbraucherfreundlich ist, wenn eine kleine dezentrale Kompressoranlage 44 das Speichermittel Luft erzeugt und an den Tanks 20, 21, 37 abspeichert, dabei kann die Verdichtungswärme über einen Heiz- oder Brauchwasserkreislauf 45 genutzt werden.

Die Vorteile pneumatischer Energiespeicher sind gegenüber den Akkus bei Elektroantrieben:
nahezu unbegrenzte Lebensdauer der Speichertanks, mehrere Fahrzeuggenerationen sind möglich, relativ große massenspezifische Energiedichte und Energieströme wie hohe Lade- und Entladegeschwindigkeiten, schadstofffreier Betrieb mit den Naturgasen Luft, Stickstoff und Kohlendioxyd, unbegrenzte Lade- und Entladezyklen, hohe Energiedruckgewinnung durch die Nutzung der Massenträgheitskräfte und ihre Wirkungen, sicherer Betrieb durch bewährte Sicherheitstechnik, keine gesundheitsgefährdenden Stoffe, Gifte, Aerosole usf., keine Abfall- und Ressourcenbelastung.

Erzeugt der Kompressor 44 Pressluft von 300 Liter, mit 300bar Druck, ruft er 26KWh Arbeitsleistung ab, speichert 14KWh als Exergie in Form von Druckenergie und 8KWh in Form von thermischer Energie, nimmt der Heizungskreislauf 45 auf.

| | |
|---|---|
| Primärenergie = | Nutzenenergie + Verlust |
| 26KWh = | 22 KWh + 4 KWh |

Mit der Energie des Arbeitsmittels fährt ein Auto von 1500kg Masse im Stadtverkehr 200km Fahrstrecke und heizt 230 Liter Wasser von 20° C auf 50° C. Kostenvergleich und Treibhausgasreduzierung nach dem heutigen Stand der Technik für den Endverbraucher:

| | | |
|---|---|---|
| 20 Liter Benzin | x 1,25 Euro = | 25,00 Euro |
| 26KWh | x 0,14 Euro = | 3,64 Euro |
| 230 Liter Heizwasser | x 0,02 Euro = | 4,20 Euro |
| Energiekosten heute | | 29,60 Euro |
| Energiekosten | | 3,64 Euro |

Das Ergebnis ist einer Kostenreduzierung von 78%, dazu eine Treibhausgasreduzierung von 70% bis 100% nach den Merkmalen der Verfahren 1 und 2 nach den Ansprüchen 1 bis 10 und gemäß schematischer Zeichnung Fig. 1 und 2.

Der Verdichter 31 ist mit der Antriebswelle 51 des Rotationsschwenkkolbenmotors 50, mit dem Antriebsgetriebe 52, den Antriebsachsen 53 geregelt von Drehzahl und Drehmoment über die Steuerleitung 54 verbunden. Durch diese Regelung wird ein hoher Energierückspeisungsgrad erreicht, die Bremsenergie über die Drehmomentschaltung 55 effektiv in Druckenergie gewandelt.

Bei Schubbetrieb, Verzögerung, Talfahrt, Rotationsenergie eines fahrenden Autos oder einer Arbeitsmaschine werden die Massenträgheitsmomente und ihre Wirkungen in Form von Exergieerhöhung (Druck- und Temperatursteigerung) der Arbeitsmittels über die Druckregeleinheit 38 in den Zwischenspeichertanks 37 abgespeichert und über das Druckregelventil 46 nach Bedarf in die Expandereinheit 47 über einen Strömungsverdichter 48 in die innere Brennkammer 63 den Kreislaufprozess zurückgefahren.

Die Ventileinheit 35 des Verdichters 31 wird ebenfalls über die Steuerleistung 54 geregelt, also das Arbeiten des Verdichters 31 im Stufendruckverhältnis einstufiger, zweistufiger und dreistufiger Arbeitsweise. Der Verdichter 31 arbeitet polytrop und wird gekühlt von dem Kühlkreislauf 26 des Verbrauchers 45 und des Gegenstromwärmetauschers 56 des Vorwärmekreislaufes 57 des Arbeitsmittels Wasser.

Aus dem Verdichter 31 wird das vorgespannte Arbeitsmittel von bis zu 150° C und einem Druck von bis zu 14,5bar über durch das drei/zwei Wegeventil 58 in den Strömungsverdichter 48 über den Druckverteiler 59 durch den Ringduffisor 60 (Strömungsverzögerung) und das Rückschlagflatterventil 61 in den äußeren Brennraum 62 der Expandereinheit 47 gefahren. Die Funktion ist die eines Sekundärstroms, der die Außenwände des Expanders 47 vor Überhitzung schützt. Wenn in den Tanks 20, 21 die inerten Arbeitsmittel Stickstoff, Kohlendioxyd gespeichert sind, fährt die zweite Regelstrecke die vorgespannten Arbeitsmittel ebenfalls in den Sekundärluftstrom. Bei dem Arbeitsmittel Luft oder auch sauerstoffangereicherter Luft fährt die zweite Reglestrecke über das drei/zwei Wegeventil 58 alternativ durch das drei/zwei Wegeventil 58 in den Primärkreislauf in die innere heize Brennkammer 63 direkt in die Oxydationszonen über einen Strömungs- und Druckverteiler 64 zu.

Die Expandereinheit 47 ist ein Vielstoffbrenner, der durch einen Hybridbetrieb mit zwei unterschiedlichen Brennstoffen arbeiten kann. Die innere heize Brennkammer 63 besteht aus einem Porenkörper 65 mit effektiven Wärmetransporteigenschaften und dem Brennstoffverteilerring 66. Das Brennsystem 65, 66 arbeitet flammenlos mit einer Oxydationstemperatur bis 1200° C. Die Oxydationszeit ist bis zu 200fach größer als bei der Explosionsverbrennung in einem Hubkolbenmotor. Die kontinuierliche modulierbare Langzeitverbrennung des Brennstoffes in den Brennkammern 63, 62 ist eine thermodynamische günstige "Gleichraum-Verbrennung" mit einer impulsartigen Arbeitsweise, die elektronisch gesteuert wird. Das Steigen des Druckes und das Fallen des Druckes erfolgt bis zu 300mal in der Sekunde und wird von den Bauteilen, dem Flatterventil ist nach strömungsmechanischen optimalen Erfordernisseen ausgelegt. Die gesamten Einheiten sind wärmedämmend isoliert. Als Brennstoffe kommen alle flüssigen und gasförmigen Kohlenwasserstoffe in Frage. Die Kraftstoffvielfalt wird bei stationärem Betrieb durch die festen alternativen Brennstoffe wie Holz, Stroh und Abfälle ergänzt.

Die Expandereinheit 47 hat zwei Porenbrennsysteme, ein systemgetrenntarbeitender Atmosphärenporenbrenner 69 bis zu 1bar und ein im System unter Druck bis 15bar arbeitenden Impulsporenbrenner 62, 63. Jedes Brennersystem 62, 63 und 69 kann für sich einzeln arbeiten oder auch zusammen parallel betrieben werden, so können auch verschiedene Brennstoffe von unterschiedlicher Konsistenz, in flüssiger Form, fester- oder gasförmigen Zuständen angewandt werden. Die hier vorgeschlagenen Porenbrennersysteme können hochwertige thermische Energien über einen weiten Leistungsbereich bei sehr geringen Emissionen in mechanische Energie wandeln.

Der Impulsporenbrenner 62, 63 arbeitet mit der Biomasse Ethanol, Methanol, Biogas und Biodiesel, der Atmosphärenporenbrenner 69 mit den Biomassen Holz- Stroh- und Graspellets auch mit Biogas, Wasserstoff, Erdgas, Naturgasen, Biodiesel und allen Pflanzenölsorten. Der Brennstoff wird in Tanks 70 gelagert und über eine Druckpumpe mit Dosiereinheit 71 über die zwölfte Regelstrecke mit dem Regelventil 72 oder auch wahlweise mit dem Regelventil 73 in die Brennstoffverteilerringe 66 gefahren. Der Arbeitsvorgang wird elektronisch gesteuert.

Dem Atmosphärenbrenner 69 aus der vierten Reglestrecke über das Druckregelventil 43 aus dem Primärkreislauf wird Verbrennungsluft mit Überdruck geregelt zugefahren. Die Abwärme der Expandereinheit 47 wird über den Rohrbündelaustauscher 74 und die Abgaswärme über den Rohrbogenbündelwärmeaustauscher 75 in thermische Nutzenergie zurückgewonnen.

Die zehnte Regelstrecke fährt das Speisewasser aus dem Tank 78 mit der elektronisch gesteuerten Pumpe 79 durch den Abgasrohrbündelwärmeaustauscher 75 über das Volumenregelstromregelventil 81 in das Expansionsventil 82 im kleinsten Querschnitt des Strömungsverdichters 48. Das Gasrohr der zweiten Regelstrecke, das den Primärgasstrom führt, wirkt mit als Verdampfungsfläche, so auch der Druckverteiler 59 und der Diffusor 60 mit dem Flatterventil 61. Die Abwärme der Expandereinheit 47 wird von dem Speisewasserkreislauf 76 durch den Rohrbündelwärmeaustauscher 74 systemgetrennt über die elfte Regelstrecke und dem Volumenstromventil 83 und dem Expansionsventil 84 geregelt in den Porenverdampfer 85 gefahren. In der Expandereinheit 47 ist ein Rohrbündelwärmeaustauscher 75 integriert, er ist mit dem Heizungswasserkreislauf 76 von dem Verbraucher 77 über die Kreislaufpumpe 80 geregelt verbunden.

Die Arbeitsmittel aus dem Primär- und Sekundärstrom werden in den Brennkammern 63, 62 der Expandereinheit 47 vermischt. Das dosiert eingespritzte Wasser aus der zehnten Regelstrecke wird verdampft. Der Dampf wird überhitzt, vermischt sich dann mit dem Verbrennungsgasen und den gasförmigen Arbeitsmitteln zu einem Impuls-Druckgasgemisch, bei einer Arbeitstemperatur von maximal 750° C und einen Impuls-Druckbetrieb von 6bar bis 15bar über den Strömungsverdichter 67 in den Porenverdampfer 85 gefahren. Der Massenanteil des eingespritzten Wassers über die zehnte Regelstrecke in Expandereinheit 47 hat die Aufgabe und Funktion, die Werkstoffbelastung der Expandereinheit 47 zu reduzieren und zu minimieren, einen hohen und schnellen Wärmeübergang zwischen den Arbeitsmitteln und den Oxydationsgasen zu erreichen, eine höhere Energiedichte der Arbeitsmittel zu haben und die Schadstoffe aus der Oxydation von öligen und festen Biomassen zu minimieren.

Der Porenverdampfer 85 ist aus einer Schaumkeramik aus Siliziumkarbid oder alternativ aus Schaummetalllegierungen von Kupfer, Eisen, Aluminium. Der Schaumkörper 86 hat offene kleine Poren durch die die Arbeitsmittel strömen, dabei gibt es und entstehen Verweilzeiten für chemische physikalische und thermische Reaktionen der Arbeitsmittel untereinander. So ist der Porenverdampfer 85 auch ein Stoffwandler, ein Oxydationskatalysator, ein Entstickungskatalysator, ein Abgasreiniger und auch ein Russpartikelfilter.

Ein 1cm³ Schaumstoffkörper entsprechen bis zu 12cm² Austauschfläche für thermische und chemische Reaktionen. Das Arbeitsmittelgasgemisch aus Luft, Stickstoff, Kohlendioxyd und Wasserdampf verlässt den Porenverdampfer 85 mit einem geregelten Temperaturbereich von 350° C - 500° C und einen Mischdampfgasdruck von bis zu 15bar. Der Massenanteil des Wassers wird vom Arbeitsfließprozess und der Zusammensetzung der Brennstoffabgase bestimmt.

Über die sechste Regelstrecke, dem Druckvolumenstromventil 87, wird das Arbeitsmittelgemisch in die obere Arbeitskammer des Rotationsschwenkkolbenmotors 50 gefahren und über die Druckregeleinheit 88 in die untere Arbeitskammer des Rotationsschwenkkolbenmotors gefahren. Die Einlassdrücke werden unterschiedlich geregelt, so wird die obere Arbeitskammer von 4 bis 8bar, die untere Arbeitskammer mit 8 bis 15bar Einlassdruck betrieben.

Der Rotationsschwenkkolbenmotor 50 wandelt die thermische, die rotations-, die kinetische und die potentielle Druckenergie des Arbeitsmittelgasgemisches über Motorwellen 53 in mechanische Energie. Damit ist eine mobile Anwendung über Räder 89 und stationäre Stromerzeugung über den Generator 90 möglich.

Der Rotationsschwenkkolbenmotor 50 arbeitet als Expansionsmotor gleichzeitig, geregelt über die Auslassbohrungen, Auslassschlitze , dem Druckexpansionsventil 91 und der Drossel-, Kondensatabscheider- und Schalldämpfer-Abgaseinheit 92. Der Abgasvolumenstromanteil wird über die Parameter aus den geforderten Leistungsdaten, elektronisch geregelt, über die Drosseleinheit 92.

Die vielseitige Funktion der Einheit 92 wird durch einen Schaummetallporenkörper 93 möglich. Das im Rotationsschwenkkolbenmotors verdichtete Arbeitsmittel wird über die Rohrleitung 100 in den Rohrbündelwärmetauscher 28 gefahren und mit diesem Arbeitsschritt wird der Kreislaufprozess geschlossen. Über den Wasserkreislauf mit der Pumpe 95 wird die Verdichterzone gekühlt und die Expansionszone geheizt. Der Rotationsschwenkkolbenmotor 50, die Drosseleinheit 92 sind wärmedämmend und schalldämmend isoliert.

Über die zwanzigste Regelstrecke mit dem Volumenstromventil 96 wird aus den Speichertanks 20, 21 kaltes flüssiges oder auch gasförmiges Arbeitsmittel direkt in die Verdichterzone des Rotationsschwenkkolbenmotors 50 und/oder auch zusätzlich in die erste Arbeitsstufe des Verdichters 31 geregelt gefahren. Bei diesem Arbeitsprozessvorgang reduziert die Umweltenergie aus dem Verdampfer 98 die anfallende Verdichtungsarbeit des Verdichters 31.

Die Regelstrecke sechszehn mit dem Regelventil 94 führt Umgebungsluft in den Rotationsschwenkkolbenmotor 50. Bei geregeltem geöffnetem Ventil 94 arbeitet der Rotationsschwenkkolbenmotor 50 als erste Verdichtungsstufe z.B. bei der Rekuperation der Massenträgheitskräfte und drückt die vorgespannte Luft durch die Rohrleitung 100 in den Kreislaufprozess.

### Auflistung der Beschreibung

An Hand von Zeichnungen wird schematisch der Aufbau, die Wirkungsweise und die Verfahren beispielhaft erläutert.

Es zeigen:
- Fig. 1: das Verfahrensschema zur Gewinnung der Arbeitsmittel
- Fig. 2: das Verfahrensschema mit den Verfahrensschritten zum Betreiben eines Rotationsschwenkkolbenmotors

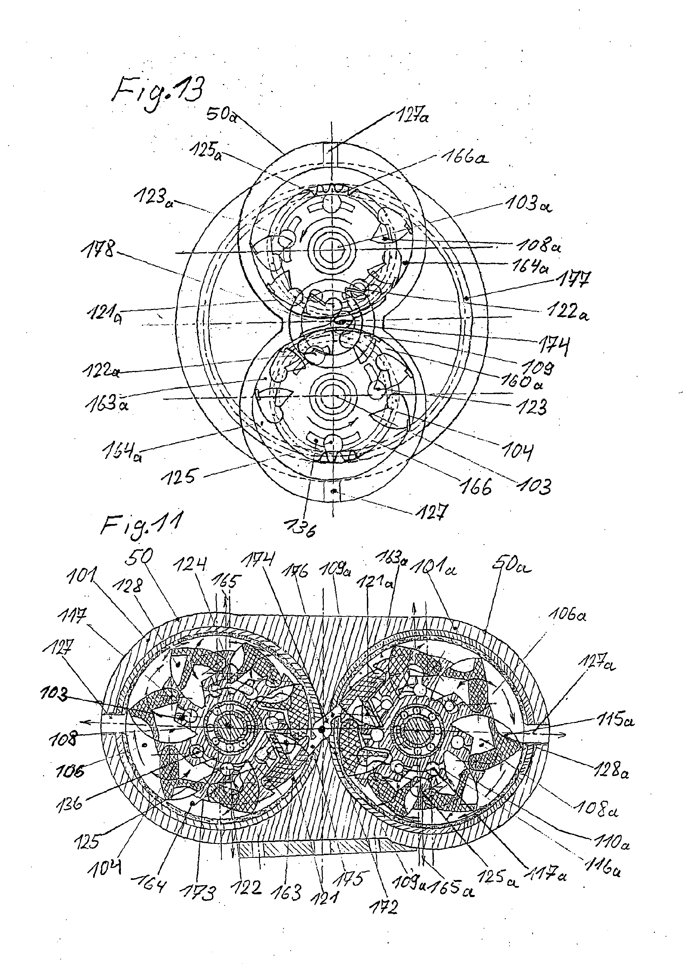

- Fig. 3: den Rotationsschwenkkolbenmotor in einem radialen Schnitt mit sieben doppelwirkenden Kolben

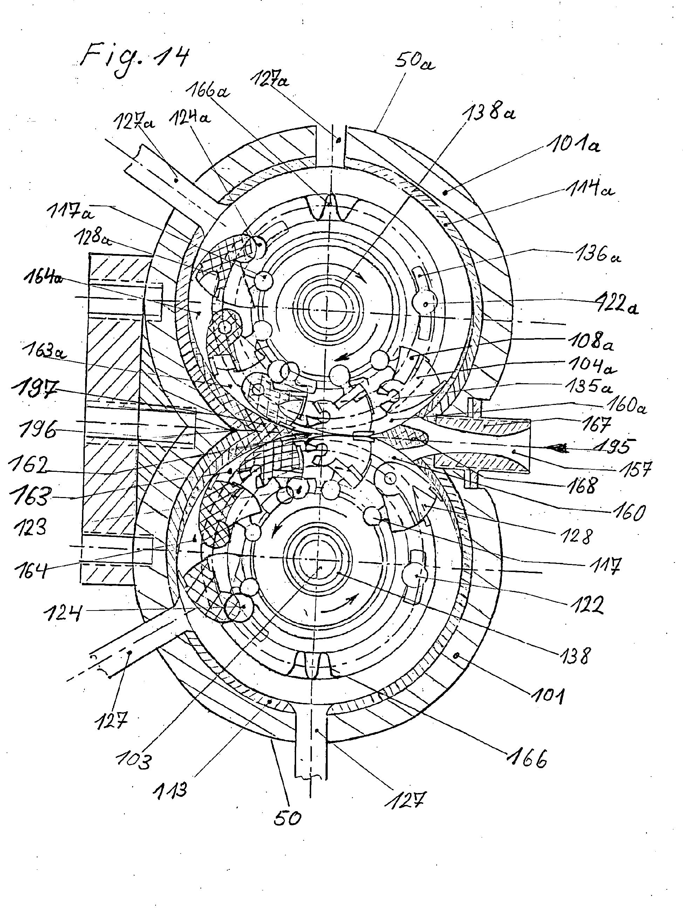

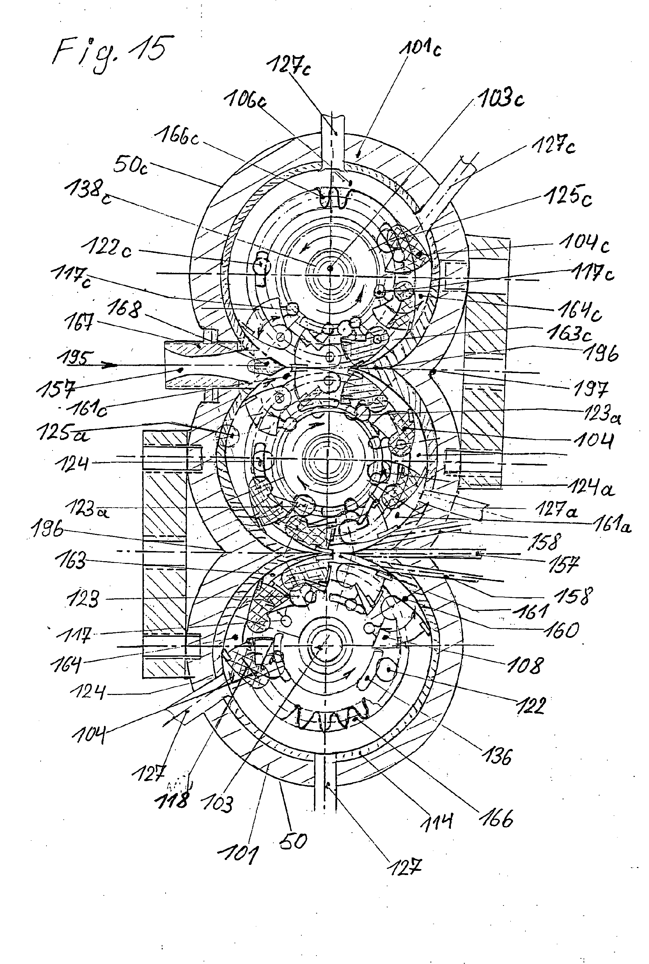

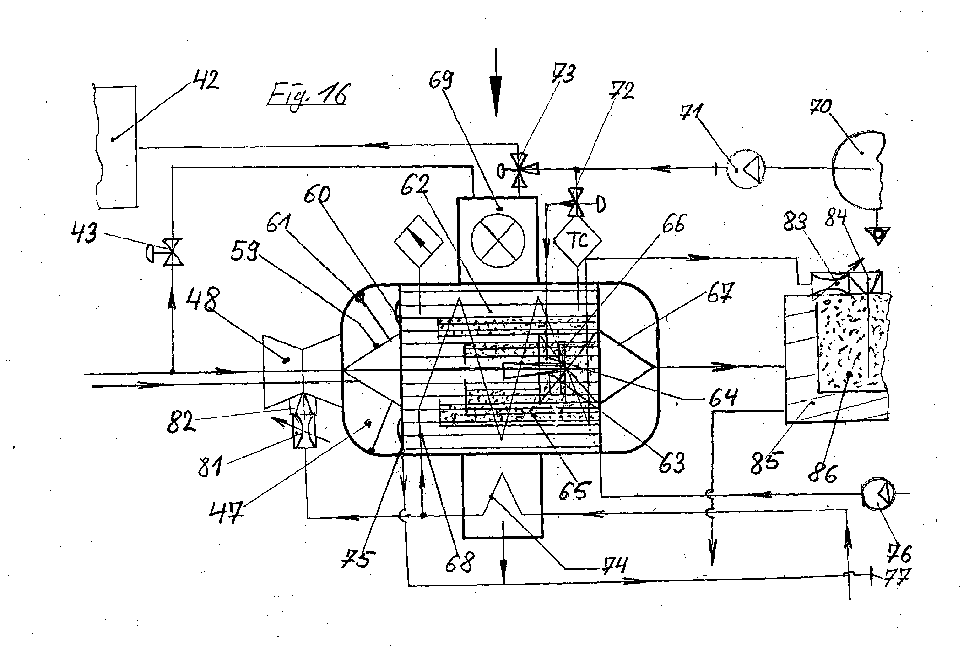

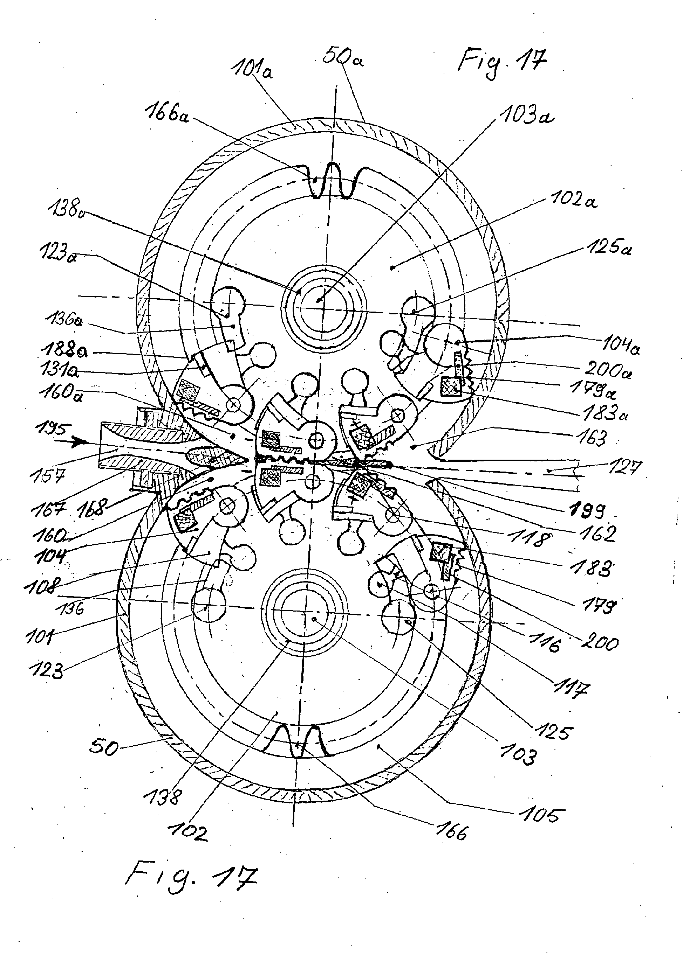

- Fig. 4: den Rotationsschwenkkolbenmotor mit einer axialen Schnitt der Arbeitswelle, dem Seitendeckel, Seitenteilen und der Lagerung

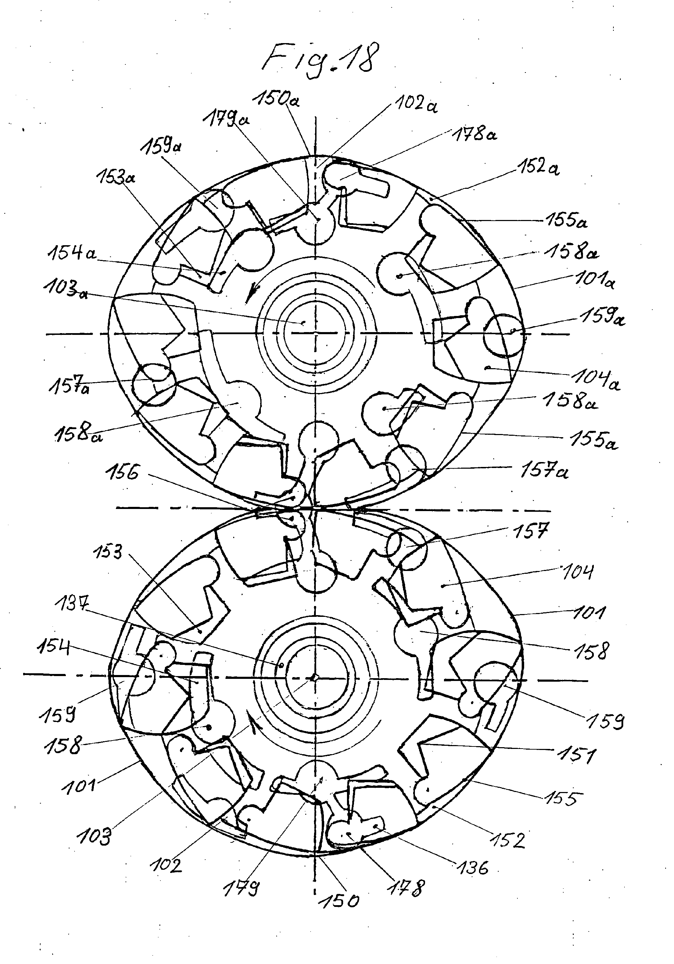

- Fig. 5: den Rotationsschwenkkolbenmotor mit fünf doppelwirkenden Kolben in zwei Arbeitsschritten
- Fig. 6: den Rotationsschwenkkolbenmotor mit sechs doppelwirkenden Kolben in verschiedenen Funktionen, Positionen, Kolbenauffangdichtungen und Kolbenschwenklagerungen
- Fig. 7: den Rotationsschwenkkolbenmotor mit vier doppelwirkenden Kolben und außen durch Kugellager abgestützt und axiale seitliche Ein- und Auslassöffnungen
- Fig. 8: den Rotationsschwenkkolbenmotor mit sieben doppelwirkenden Schwenkkolben und axialer durch die Motorwelle führender Arbeitsmittel- Ein- und Auslasskanälen der unteren Kolbenkammern und axialer seitlicher Ein- und Auslassöffnungen
- Fig. 9: den Rotationsschwenkkolbenmotor mit sieben Schwenkkolben im Schnitt A - B - C gem. Fig. 8
- Fig. 10: den Rotationsschwenkkolbenmotor mit zwei Zylinder und zwei parallellaufenden Rotoren über Zahnräder gekoppelt und einem radialen Einlassdüsendiffusor Einheit über einen Druckverteiler , mit großer Exzentrizität der Rotorenachsen zur Zylinderachse
- Fig. 11: den Rotationsschwenkkolbenmotor mit zwei Zylindern und einer gegenläufigen Arbeitsdrehrichtungen und radialen Einlässen des Arbeitsmittels über eine Dosier- Diffusoreinheit
- Fig. 12: die Dosier - Diffusoreinheit im radialen und axialen Schnitt A - B und Ausschnitt E
- Fig. 13: den Doppelzylinder Rotationsschwenkkolbenmotor mit gegenläufiger Arbeitsrichtung, kombiniert mit einem Umlaufgetriebe
- Fig. 14: den parallellaufenden Doppelzylinder Rotationsschwenkkolbenmotor mit Stirnzahnrädern auf den Motorachsen, aufgefangenen Schwenkkolben, die sich im oberen Umfangbereich gegeneinander abstützen und nur 50% im Umfangbereich doppelwirkend arbeiten
- Fig. 15: parallelarbeitenden Dreizylinder Rotationsschwenkkolbenmotor mit zwei radialen Einlass-Einheiten für das Arbeitsmittel, mit einem parallelarbeitenden Zahnradgetriebe gekoppelt
- Fig. 16: die Expanderreinheit in einem vergrößertem Ausschnitt nach Fig. 2
- Fig. 17: den parallellaufenden Doppelzylinder Rotationsschwenkkolbenmotor mit konzentrischer Anordnung der Rotorachsen, dessen Schwenkkolben mit Laufplatten aus Dauermagneten versehen sind
- Fig. 18: den parallellaufenden Rotationsschwenkkolbenverdichter 150, 150a mit zwei ellipsenförmigen Zylindern und konzentrischer Anordnung der Rotorachsen

## Patentansprüche

1. Verfahren zur Gewinnung, Speicherung und Aufbereitung von flussigen Arbeitsmitteln aus den Verbrennungsabgasen von fossilen und regenerativen Brennstoffen, die bei der Erzeugung von elektrischen Strom und Heizwärme in den Kraftwerken entstehen, **dadurch gekennzeichnet,**
**dass** gekühlte und gereinigte Verbrennungsabgas wird aus dem Kühlturm (4) über die Abscheider-Saugvorrichtung (5) durch die Saugrohrleitung (6) in den Rotationsschwenkkolbenkompressor (6a) geleitet. Der Rotationsschwenkkolbenkompressor (6a) drückt das Verbrennungsabgas durch eine Gasfilter- und molekulare Gaszerlegungsanlage (7). Die Hauptabgaskomponenten Stickstoff und Kohlendioxyd werden getrennt in ein Gasverflüssigungsanlage (8) gefahren. Die verflüssigten und gereinigten Arbeitsmittel Stickstoff und Kohlendioxyd werden dann in kälteisolierte Tanks (9) geleitet und gespeichert.

2. Verfahren nach Anspruch 1, **dadurch gekennzeichnet,**
**dass** aus den Speichertanks (9) die Arbeitsmittel im Kraftwerk, Heizkraftwerk oder Verbrennungsanlagen über einen Rotationsschwenkkolbenmotor (18) nach Bedarf in Strom zurück gewandelt werden kann.

3. Verfahren nach Anspruch 1 **dadurch, gekennzeichnet,**
**dass** in dezentralen Tankstellen (13) die Arbeitsmittel für eine vorteilhafte Verwendung den Umweltbedingungen angepassten thermophysikalischen Zuständen aufbereitet und über eine sichere Tanktechnik an den Endverbraucher (14) verkauft werden.

4. Verfahren nach Anspruch 3, **dadurch gekennzeichnet,**
**dass** die Arbeitsmittel mit Sauerstoff vermischt und angereichert werden, so das alle Brennstoffe ökonomisch und ökologisch in einer Brennstoffeinheit chemisch in Nutzenergie gewandelt werden können.

5. Verfahren nach Anspruch 1 bis 4, **dadurch gekennzeichnet,**
**dass** die nach dem Verfahren 1 gewonnenen Arbeitsmittel Kohlendioxyd und Stickstoff untereinander vermischt werden, in verschiedenen thermophysikalischen Zuständen, Volumenverhältnisseen, um die Energieeffizienz zusteigern, sich günstig in ihre physikalischen Eigenschaften ergänzen und in einer zweiten Energiewandelkette genutzt werden und dabei keine Schadstoffe und zusätzliche Treibhausgasen entstehen.

6. Verfahren zum Beteiben eines Rotationsschwenkkolbenmotors mittels Druckgas, bei dem in einem Kältekreislaufprozess und einem Wärmekreislaufprozess das Arbeitsmittel vor der Zuführung in einen Rotationsschwenkkolbenmotor, mit einen vertretbaren Aufwand und günstigen thermophysikalischen Zustand den Umweltbedingungen angepasst in einem Tank gespeichert, das flüssige, das feste und das hochgespannte gasförmige Arbeitsmittel wird in einen sehr kalten, gasförmigen Zustand mit einem mittleren Druck überführt, die Kälteenergie genutzt, in ein Rekuperator zur weiteren Erwärmung in eine Expandereinheit geleitet, über einen Porenverdampfer die Energiedichte erhöht und von dort in den Rotationsschwenkkolbenmotor expandiert, wobei überschüssiges Arbeitsmittel über ein Abgasabscheider- und Schalldämpferanlage in die Umwelt ausgestoßen wird, **dadurch gekennzeichnet,**
**dass** das Arbeitsmittel als Brennmedium mit Sauerstoff angereichert ist und als Primärgasstrom mit geregeltem Betriebsdruck in die innere Berennkammer der Expandereinheit zu leiten ist. Ein zweiter Arbeitsmittelstrom als Sekundärstrom zur Kühlung in die äußere Brennkammer der Expandereinheit gefahren wird und beide Arbeitsmittelströme sich in den Brennkammern mischen und einen impulsartigen, geregelten Arbeitsdruck und Volumenstrom, nach abrufbarem Leistungsbedarf aus der Expandereinheit über den Porenverdampfer dem Rotationsschwenkkolbenmotor zuführbar ist,
**dass** im Kreislaufprozess überschüssige und autonom erzeugtes Arbeitsmittel in einem Drucksspeicherkessel zu leiten und aus diesem über einen Porenwärmetauscher einer Expandereinheit dem Kreislaufprozess zuführbar ist, das nur der Teil des Arbeitsmittels, den Rotationsschwenkkolbenmotor mit einem Expansionsenddruck über 2,5 bis 5,5bar erreicht, über die Abscheider-, Abgas- und Schalldämpfereinheit mit einer Temperatur von 5 bis 15° C und ohne Schadstoffe in die Umwelt ausgestoßen wird und durch erneuten Abruf von Arbeitsmitteln ersetzt werden muss und
**dass** das vorgespannte gasförmige Arbeitsmittel in einen Porenverdampfer zu ein Druckgasgemisch aufbereitet wird und dabei die energiedichte des Arbeitsmittels erhöht und die thermischen Werkstoffbelastungen in den nachfolgenden Arbeitseinheiten reduziert werden und
**dass** bei einem teilgeschlossenen Kreislaufprozess Luft, Stickstoff, Wasser, Alkohole und Kohlendioxyd und bei einem geschlossenen Kreislaufprozess Helium, Ammoniak, Alkohole, Kältemittel, Kohlendioxyd und Kohlenwasserstoffe durch Oxidation von Biomasse als Brennstoffmedium nutzbar sind.

7. Verfahren zum Betreiben einer stationären und mobilen Rotationsschwenkkolbenmotoranlage mittels Druckluft nach Anspruch 6, **dadurch gekennzeichnet,**
**dass** bei teilgeschlossenem Kreislaufprozess Luft aus der Atmosphäre ansaugbar, in den Druckspeicherkessel leitbar, in einen Abscheider von Wasser und Schadstoffen befreit, als Arbeitsmittel geregelt in den Kreislaufprozess leitbar ist,
**dass** autonom das Arbeitsmittel Luft in Form von hochgespanntem Druckgas aus regenerativen Energiequellen der Umwelt über eine Kompressoranlage mit Abwärmetauscher herstellbar, in Speichertanks zu leiten und als Arbeitsmittel dem Kreislaufprozess direkt zuführbar ist,
**dass** bei Talfahrt oder Schubbettrieb der Rotationsschwenkkolbenmotoranlage, Arbeitsmittel durch mechanischer Energie aus einer Antriebsmechanik erzeugbar ist, wobei potentielle Druckenergie zu speichern, in Drehbewegung und somit in Fortbewegung umwandelbar ist und überschüssige thermische und potentielle Energie in den Kreislaufprozess der thermischen Rekuperation zuführbar und wieder verwendbar ist.

8. Einrichtung zur Durchführung des Verfahrens nach Anspruch 6 bestehend aus den Tanks (20,21) für hochgespanntes Druckgas, flüssiges Gas und Trockeneis (gefrorenes, gepresstes Kohlendioxyd), dem Druckregelventil (22), dem Expansionsventil (23), einen Porenkühler (24), einen Rekuperator (28), einem Druckdampfkondensator (30), Verdichter (31), 3/2-Wege-Regelventil (32), 2-Wege-Stromregelventil (49), einer Expandereinheit (47) mit einer Impulsporenberenneinheit (62, 63, 65), einer zweiten Atmosphärenbrenneinheit (69), einem Porenverdampfer (85), Druckregelventil (88), 2-Wege-Stromregelventil (87), einem Rotationsschwenkkolbenmotor (50), einer Abgas-Abscheider-Schalldämpferanlage (92), **dadurch gekennzeichnet,**
**dass** der Porenkühler (24) mit einem Porenkörper (25) ausgefüllt ist, wobei das hochgespannte Arbeitsmittel über ein erstes Druckregelventil (22) und ein erstes Expansionsventil (23) über den Porenkörper (25) in den Porenkühler (24) auf einen Arbeitsdruck entspannt wird und über die erste Leitung in den Rekuperator (28) zu leiten ist,
**dass** der Verbraucher (27) über den ersten Kältekreislauf (26) aus dem Porenkühler (24) Kältenutzung abruft,
**dass** der Rekuperator (28) mit einem Druckgaskondensator (30) gekoppelt ist und der Verbraucher (45) über den ersten Wärmekreislauf (29) Wärme geregelt abruft,
**dass** die Einrichtung mit einen Drucksspeicherkessel (37) ausstattet ist, in den in verschiedenen Bereichen des Kreislaufprozesses überschüssige anfallendes und autonom erzeugtes Arbeitsmittel leitbar und in einen Kreislaufprozess rückführbar ist, dass das Arbeitsmittel als Berennmedium über die zweite Leitung und dem ersten 3/2-Wegeregelventil (58) in die Expandereinheit (47), in die innere Brennkammer (63) über den ersten Strömungs- und Druckverteiler (64) als Primärgasstrom in die erste Impulsporenbrenneinheit (62, 63, 65) gefahren wird,
**dass** das Arbeitsmittel über die dritte Leitung mit dem 3/2-Wegeregelventil (32) in den Verdichter (31) geleitet wird, vorgespannt über das erste 2-Wege-Stromregelventil (49) durch den zweiten Strömungsverdichter (48), über den zweiten Druckverteiler (59) durch den ersten Ringdiffusor (60) und das Rückschlagflatterventil (61) in die äußere Impulsporenbrennkammer (62) als Sekundärstrom gefahren wird,
**dass** die Expandereinheit (47) mit der Atmosphärenbrenneinheit (69) eine zweite Brennstoffeinheit hat, die zusätzlich über die vierte Leitung mit dem zweiten Druckregelventil, (43), mit dem Sauerstoff angereichertem Arbeitsmittel als Brennstoffmedium systemgetrennt gefahren wird,
**dass** das sehr stark isochor erhitzte Arbeitsmittel sich in der Expandereinheit (47) zu einem Druckgasgemisch vermischt und durch die Arbeitsweise des Flatterventils (61) die Strömungsgeschwindigkeit in schneller Folge ändert, impulsartig über den Strömungsverdichter (67) über die fünfte Leitung in den Porenverdampfer (85) zu leiten ist,
**dass** das Arbeitsmittel im Porenverdampfer (85) durch einen Schaumkörper (86) mit vielen Poren gefahren wird und zusätzlich mit einem zweiten oder dritten Arbeitsmittel in gasförmigen Zustand vermischt wird,
**dass** das Arbeitsmittel als Dampfgasgemisch unter Druck durch die sechste Leitung über das dritte Druckregelventil (88) durch die siebente Leitung über das zweite 2-Wege-Stromregelventil (87) in die Expansionskammern eines Rotationsschwenkkolbenmotors (50) geregelt geleitet wird,
**dass** das expandierte Arbeitsmittel in einen Teilstrom aus Druckgas und dem kondensierten Arbeitsmittel in einer Abscheider-Abgas-Drossel-Schalldämpfereinheit (92) durch einen Schaumkörper (93) und somit in sauberes Abgas und Kondensat getrennt wird und in die Umwelt ausstößt und das Kondensat des Arbeitsmittels über eine siebente Leitung in den Tank (78) zu leiten ist,
**dass** das expandierte Arbeitsmittel im Rotationsschwenkkolbenmotor (50) in die Verdichtungskammern (107, 108) in Reihe geleitet wird und vorgespannt über die achte Leitung geregelt vom zweiten Expansionsventil (51) in den Rekuperator (28) gefahren wird und seine thermische Energie an das zuzufahrende neue Arbeitsmittel angibt, gleichzeitig der Verbraucher (45) über den Kühlwasserkreislauf (29) die Abwärme nutzt und das im Druckdampfkondensator (30) anfallende Mischkondensat der flüssigen Arbeitsmittel über die neunte Leitung durch den des vierten und fünften Rekuperators (56, 56a) in den Tank (78) zu leiten ist.

9. Einrichtung zur Durchführung des Verfahrens nach Anspruch 6 und 7 bestehend aus einem Tank (78) für flüssige Arbeitsmittel, einer Druckpumpe (79), Rekuperatoren (74, 68), Volumenregelstromventile (81, 83), Expansionsventile (82, 84), Porenverdampfer (85) und dem Porenschaumkörper (86) **dadurch gekennzeichnet,**
**dass** das flüssige Arbeitsmittelgemisch im Tank (78) gespeichert wird und mit der Pumpe (79) durch die zehnte Leitung in den zweiten Rekuperator (74) geführt wird und als vorgewärmtes flüssiges Arbeitsmittel über das 2-Wege-Stromregelventil (81), dritte Expansionsventil (68) in den Strömungsverdichter (48) dosiert gefahren wird und über den dritten Rekuperator (74) und die elfte Leitung über das vierte 2-Wege-Stromregelventil (83) in den Porenverdampfer zu leiten ist,
**dass** das flüssige Arbeitsmittel über den Schaumstoffkörper (86) verdampft und ein Druckgasdampfgemisch von hoher Energiedichte, Reinheit und niedrigen Arbeitmitteltemperaturen von unter 550° C bildet,
**dass** die Expandereinheit (47) mit einem Rohrbündelaustauscher (75) systemgetrennt versehen ist, der über den Heißwasserkreislauf (76) und der Pumpe (80) den Verbraucher (77) mit Wärmeenergie versorgt,
**dass** das flüssige oder gasförmige Brennmedium in den Tank (70) gespeichert, über die elektronisch geregelte Dosierpumpe (71), durch die zwölfte Leitung geführt, geregelt von dem erstem und zweiten Dosierventilen (72, 73) in die Brennstoffeinheiten (62, 63, 69) zu leiten ist.

10. Einrichtung zur Durchführung der Verfahren nach Anspruch 6 bestehend aus dem Verdichter (31), Elektromotor (36), Rotationsschwenkkolbenmotor (50), einem 3/2-Wegeventil (58), den Druckregelventilen (38, 46), Regelventil (94), einen 3/2-Wegeventil (39), regenerativen Energiequellen (41, 42), dem Verdampfer (98) mit den Regelventilen (97, 99), den Antriebsachsen (53), der Steuerleitung (54), der Motorachse (103), einer Ventilsteuereinheit (35) und einer Kupplungseinheit (55) **dadurch gekennzeichnet,**
**dass** der Elektromotor (36) über die regenerativen Energiequellen (41, 42) Strom erhält und den Verdichter (31) antreibt und das hochgespannte Arbeitsmittel Luft durch die dreizehnte Leitung über das vierte Druckregelventil (38) in den Druckgaszwischenspeicher (37) leitet, eine vierzehnte Leitung fährt das Arbeitsmittel über das erste 3/2-Druckregelventil (39) in den Tank (20) oder über die fünfzehnte Leitung über das erste Expansionsventil (23) in den Kühler (25),
**dass** der Rotationsschwenkkolbenmotor (50) den Verdichter (31) antreibt, geregelt über die Regelleitung (54) und der Ventileinheit (35) und dabei das Arbeitsmittel Luft über die sechszehnte Leitung mit dem Filter (33) autonom ansaugt und im Druckgaszwischenspeicher (37) ablagert und
**dass** die Expandereinheit (47) dafür die nötige Arbeitsenergie liefert,
**dass** der Verdichter (31) und der Rotationsschwenkkolbenmotor (50) in Reihe geschaltet, von den Antriebsachsen (53) angetrieben, über die siebzehnte Leitung und das zweite Regelventil (94) das Arbeitsmittel Luft ansaugt, so dass die Massenkräfte und deren Wirkungen, die bei Schubbetrieb, Talfahrt, oder Verzögerung eines Fahrzeuges anfallen, im Druckgaszwischenspeicher (37) als Exergie abgespeichert werden und über die achtzehnte Leitung geregelt durch das fünfte Druckregelventil (46) wieder in den Kreislaufprozess zurückgefahren und in mechanische Energie zurückgewandelt wird,
**dass** der Außenverdampfer (98) durch die neunzehnte Leitung über das dritte Regelventil (97) und dem dritten 3/2-Wegeregelventil (99) in den Tanks (20, 21) einen inneren Betriebsdruck geregelt aufbaut.

11. Rotationsschwenkkolbenmotor zur Nutzung des Verfahrens nach Anspruch 6, 7, 8 und 10, bestehend aus einem kühlbaren Gehäuse (101), in dem in einer Innenbohrung (105) ein Rotor (102) drehbar gelagert ist, dessen Rotorachse (103) exzentrisch zum Gehäuse (101) angeordnet ist und so einen sichelförmigen Arbeitsraum (105) bildet, auf dem Umfang des Rotors (102) in gleichmäßigen Abständen Schwenkkolben (104) ausschwenkbar angeordnet sind, der Rotor (102) ist mit Ausnehmungen versehen, die den Schwenkkolben (104) aufnehmen, beim Ein- und Ausschwenken bildet der Schwenkkolben eine untere Schwenkkolbenarbeitskammer (108) und eine obere Schwenkkolbenarbeitskammer (112), dabei werden die Schwenkkolben (104) in der unteren Schwenkkolbenkammer (108) radial um die Drehachse (132, 133, 134) der Schwenkkolben (104) gasdicht geführt, bei einer Umdrehung des Rotors (102) verändert sich das Volumen der Schwenkkolbenarbeitskammern (108, 112) in zwei Arbeitstakten, die Schwenkkolbenoberkante (11) arbeitet gasdicht axial zum Rotor (102) über den Gleitringzylinder (113) auf der Expansionsseite (106), auf der Verschiebe- und/oder Druckaufbauseite mit einer Druckspülung und das Gehäuse (101) eine Kühlkammer (181) besitzt und mit radialen Bohrungen zum Einbringen des Arbeitsmittels durch die Einlässe (119, 120, 157, 158, 159, 169) und zum Ausbringen mit dem Auslass (127) und im Zylinderseitendeckel (142) durch koaxiale Bohrungen zum Einbringen des Arbeitsmittels mit den Einlässen (121, 122, 123), den Auslässen (124, 125, 126, 127) mit koaxialen Schlitzkanälen (136) in den Seitenteilen (139) ausgefräst, den axial durch die Rotorachse (103) gehenden Einlasskanal (148), dem Auslasskanal (149) und den radialen Verteilerkanälen (146) im Rotor (102) versehen ist, **dadurch gekennzeichnet,**
**dass** axial im Rotor (102) die zylinderförmigen unteren Depot- und Dosierkammern (117) mit mindestens zwei radialen Strömungsverdichtern (116), in der vor deren Schwenkkolbenbogenfläche (115) die oberen Depot- und Dosierkammer (128) halbzylinder- oder pfeilförmig axiale Ausfräsungen haben, wobei die Schwenkkolben (104) eine Form besitzen, das bei anfallender maximaler Exzentrizität (165) die Schwenkkolbenkammer (108) abgedichtet sind,
**dass** die äußere radiale Kolbenbogenform (109) von dem inneren Durchmesser des Gehäuses (101) bestimmt wird.

12. Rotationsschwenkkolbenmotor nach Anspruch 11, **dadurch gekennzeichnet,**
**dass** ein Schwenkkolben (104) doppelt wirksam arbeitet, in dem die Schwenkkolbenflächen (110, 115) zwei Arbeitskammern (108, 112) bilden.

13. Rotationsschwenkkolbenmotor nach Anspruch 11, 12, **dadurch gekennzeichnet,**
**dass** die Expansionsdruckkräfte über die Schwankkolbenflächen (110) mal dem Schwenkkolbenradius (118) über die Schwenkkolbenoberkante (111) auf die zylinderförmige Gehäusewand (101), die exzentrisch zur Rotorachse (103) angeordnet ist, ein Drehmoment erzeugt, das über die Winkelfunktion und den Radius des Rotors (102) auf die Rotorachse (103) übertragen wird,
**dass** die Arbeitsweise in der unteren Schwenkkolbenkammer (108) ist polytrop, im zyklischen Takt, bei einer Umdrehung des Rotors (102) zwei Arbeitstakte ausführt, einen Expansionstakt mit einem Verschiebe- und Verdichtungstakt mit einem Druckverhältnis 2-4,
**dass** die Expansionsdruckkräfte in der oberen Schwenkkolbenkammer (112) über die vordere Schwenkkolbenfläche (115) wirken und über die Winkelfunktion und dem Radius des Rotors (102) ein Drehmoment erzeugen,
**dass** die Arbeitsweise bei radialer Einführung (119, 120) das Arbeitsmittel in die äußere Schwenkkolbenkammer (112) isentrope, die eines Volumenstromexpansionsmotors ist, mit einem Expansionsdruckverhältnis 2 - 3 und einem Verdichterdrucksverhältnis 2 auf der Verdichterseite in der Arbeitskammer (107), erfolgt die Einführung (121, 122, 123) des Arbeitsmittels axial zum Rotor (102), ist die Arteisweise polytrop, im zyklischen Takt, mit einem Expansionsdruckverhältnis 4-8 und einem Verdichtungsdruckverhältnis 2-4.

14. Rotationsschwenkkolbenmotor nach Anspruch 11, 12 und 13, **dadurch gekennzeichnet,**
**dass** in den Schwenkkolbenkammern (108, 112) durch den Schwenkkolben (104) getrennt, unterschiedliche Arbeitmittel mit verschiedenen thermophysikalischen Zuständen gefahren werden können,
**dass** die untere Schenkkolbenarbeitskammer (108) mit wesentlich höherem Betriebsdruck arbeiten kann und das die untere Schwenkkolbenarbeitskammer (108) allein mit vorgespanntem Arbeitsmittel beschickt, optimiert mechanische Leistung abgibt.

15. Rotationsschwenkkolbenmotor nach Anspruch 11 und 13, **dadurch gekennzeichnet,**
**dass** der Rotationsschwenkkolbenmotor (50) über einen externen Antrieb als Rotationsschwenkkolbenverdichter (150) mehrstufig betrieben werden kann,
**dass** in der ersten oberen Vordichtungsstufe (152, 152a) die Gasdruckkräfte auf die radialen Schwenkkolbenbogenflächen (155, 155a) tangential wirken, durch die Druckspülung eine Strömungsverdichtung mit einem Druckverhältnis bis zu 2,5 aufgebaut wird, bei Entlastung der tangentialen Reibungskräfte, bei Nutzung der Fliehkräfte der Schwenkkolben (104), vorteilhaft Druckenergie gewonnen wird,
**dass** die unteren Schwenkkolbenflächen (151) keilförmig ausgebildet sind und in der zweiten Verdichtungsstufe (153, 153a) ein sehr hohes Druckverhältnis aufbauen,
**dass** die Verdichtung auf der kleinen Ellipsennebenachse (103) erfolgt, ein Rotationsschwenkkolbenverdichter (150) hat bis zu sechs Einlässe (157, 157a, 158, 158a, 159, 159a), bis zu vier Arbeitsdruckzwischenstufen (178, 178a, 179, 179a) und mindestens einen Auslass (156).

16. Rotationsschwenkkolbenmotor, **dadurch gekennzeichnet,**
**dass** die Schwenkkolben (104) sich mit den Schwenkkolbenoberkanten (111) an einem metallischen Zylinderstützring (144), der mit einem weichen elastischen Material beschichtet ist, abstützen und **dadurch gekennzeichnet ,**
**dass** der Zylinderstützring (144) mit zwei Kugel- oder Wälzlagern (194) drehbar im Gehäuse (101) gelagert ist.

17. Rotationsschwenkkolbenmotor nach Anspruch 11, **dadurch gekennzeichnet,**
**dass** der Schwenkkolben (104) in seiner Drehachse (132) halbzylinderförmig, axial zum Rotor (102) gelagert ist oder mit einem Drehbolzen (133) zusätzlich versehen ist, bei hohen thermischen Beanspruchungen oder Druckdifferenzen mit einer Bohrung axial zum Rotor (102) mit einem Schwenkkreisausschnitt (134), der in einen zylinderförmigen Stegkörper (135) greift und somit Drehschwenkung führt,
**dass** der zylinderförmige Stegkörper (135) den Rotor (102) axial an dessen Arbeitskammerwand (189) verstärkt.

18. Rotationsschwenkkolbenmotor, **dadurch gekennzeichnet**,
das im Motorgehäuse (101) axial zum Rotor (102) ein metallischer Stützringzylinder (114) eingeschrumpft ist, der mit einem eingepressten Gleitzylinder (113) versehen ist, der aus einer besonderen gleitfähigen abriebfesten Werkstoffkombination besteht.

19. Rotationsschwenkkolbenmotor, **dadurch gekennzeichnet,**
**dass** das Zylinder-Seitenteil (141) aus einer besonderen gleitfähigen abriebfesten Werkstoffkombination besteht und vom Zylinderdeckel (142) über die Dichtung (139) mit dem Motorgehäuse (101) verschraubt ist.

20. Rotationsschwenkkolbenmotor, **dadurch gekennzeichnet,**
**dass** die Schwenkkolben (104) in der unteren Schwenkkolbenkammer (108) über eine Kolbenführung 130 durch mit Prozessgasdruck gespülte Dichtungen (185, 186) mit Dichtleisten (187) geführt und zusätzlich an der Schwenkkolbenkammerkante (188) aufgefangen werden.

21. Rotationsschwenkkolbenmotor nach Anspruch 11, 12, 13 und 14, **dadurch gekennzeichnet,**
**dass** die untere Schwenkkolbenarbeitskammer (108) axial im Rotor (102) mit einer Bohrung, die als Depot- und Dosierkammer (117) arbeitet und mindestens zwei Diffusorkanäle (116) besitzt und die vordere Schwenkkolbenfläche (115) mit axial halbzylinder- pfeil- oder dreiecksförmigen Ausfräsungen (128) ausgeführt ist, die als die obere Depot- und Dosierkammer arbeitet.

22. Rotationsschwenkkolbenmotor nach Anspruch 11, 12, 13, 14 und 21, **dadurch gekennzeichnet,**
**dass** zwei oder mehrere Rotationsschwenkkolbenmotoren (50, 50a) deren drehschwingende gelagerten Leistungsteile die Schwenkkolben (104, 104a, 104b) in einem bestimmten Bereich der Umfangbewegung gegeneinander abstützen und als einen oder mehrere Vordruckarbeitsräume (160, 160a, 161) und mehrere Expansionsräume (162, 163, 163a, 163b, 164, 164a; 164b, 164c) bilden und so den Volumenstrom des Arbeitsmittels erst in Druckimpulse wandelt und dann die Expansionskraft über die Rotoren (102, 102a, 102b) in mechanische Energie wandelt,
**dass** die Rotorachsen (103, 103a, 103b) exzentrisch und konzentrisch zu den Motorgehäusen (101, 101a, 101b) angeordnet sein können,
**dass** der Abstand der Rotoren (102, 102a, 102b) von der Volumenstrommitte (195) des Arbeitsmittels die Effektivität der Volumenänderungsarbeit mitbestimmt,
**dass** die Einführung des vorgespannten Arbeitsmittels durch den Strömungsverdichter (167) über den Druckverteiler (168) in die vordere Vordruckstufe (160, 160a) oder bei unterschiedlichen vorgespannten Arbeitsmittel getrennt über die Einlässe (158) in die Vordruckstufe (160, 160a) und den Einlass (157) in die Vordruckstufe (161) erfolgt, dass die Schwenkkolben (104, 104a, 104b) parallel laufen und von Zahnrädern (166, 166a, 166b), die auf den Rotorachsen (103, 103a, 103b) festsitzen, zwangsgeführt werden,
**dass** die untere Schwenkkolbenarbeitskammer (108, 108a, 108b) über die Schwenkkolben (104, 104a, 104b) und den Schwenkkolbenflächen (110, 110a, 110b) die Volumenänderungsarbeit durchführt und die Expansionsarbeit mit ausführt und diese verstärkt in ein Drehmoment wandelt,
**dass** die tangentiale Reibungsarbeit der Schwenkkolbenoberkante (111, 111 a, 111 b) durch Auffangen an der Schwenkkolbenkammerkante (188, 188a, 188b) bis zu mindest 66% des Motorgehäuseumfangs (101, 101 a, 101b) vermieden wird, bei konzentrischer Anordnung der Rotorachsen (103, 103a, 103b), keine Reibungsarbeit anfällt,
**dass** im Arbeitsbereich der Vordruckseite (160, 17'60a, 160b) und der Expansionsseite (163, 163a, 163b, 164, 164a, 164b) ein mit Auswölbungen (196, 196a, 196b) ausgeformten Arbeitszylinder (197, 197a, 197b) aus einer besonderen gleitfähigen Werkstoffkombination in den Motorszylinder (101, 101a, 101b) aufgeschrumpft ist, so dass die Arbeitskammern gasdicht sind,
**dass** die Schwenkkolbenoberkanten (111, 111a, 111b) Laufplatten (183, 183a, 183b) besitzen, die aus besonders warmfesten und verschleißfesten Werkstoffen bestehen.

23. Rotationsschwenkkolbenmotor nach Anspruch 22, **dadurch gekennzeichnet,**
**dass** die Schwenkkolbenoberkanten (111, 111 a, 111 b) mit Laufplatten (183, 183a, 183b) ausgeführt , die aus starken dauermagnetischen Materialien bestehen und so auf den Schwenkkolben (104, 104a, 104b) angeordnet sind, das gleichnamige Pole gegenüber liegen und sich auf der Expansionsseite (163, 163a, 163b,) gegenseitig abstoßen,
**dass** die Schwenkkolben (104, 104a, 104b) aus nicht magnetischen Materialien wie Kohlefaserkunststoffe, Keramik oder Glasfaserkunststoffe bestehen und die verzahnten Schwenkkolbenbogenfläche (109, 109a, 109b) unterhalb der Verzahnungen (179, 179a, 179b) mit einer Werkstoffplatte (200, 200a, 200b) axial zum Motorgehäuse (101, 101 a, 101 b) angeordnet sind, durch die die magnetischen Feldlinien nicht wirken können,
**dass** die Zahnräder (166, 166a, 166b), die auf den Rotorachsen (103, 103a, 103b) fest sitzen, das magnetische Moment im mechanische Bewegungsenergie wandelt,
**dass** die Rotorachse (103, 103a, 103b) konzentrisch zum Motorgehäuse (101, 101a, 101b) angeordnet ist und die Schwenkkolben (104, 104a, 104b) so geführt sind, dass die Schwenkkolbenoberkanten (111, 111 a, 111 b) den Arbeitszylinder (101, 101 a, 101 b) nicht berühren,
**dass** im Arbeitsbereich (162, 162a) zwischen den Schwenkkolben (104, 104a, 104a, 104b) ein Gleit- und Reibkörper (199, 199a, 199b) aus nichtmagnetischen selbstschmierenden Werkstoffen angeordnet ist, der auch so aufgeführt ist, das die magnetischen Feldlinien ihn nicht durchdringen.

24. Rotationsschwenkkolbenmotor nach Anspruch 21, 22, und 23 **dadurch gekennzeichnet,**
**dass** bei der konzentrischen Anordnung der Rotorachsen 103, 103a der Expansionsdruck des Arbeitsmittels in der unteren Schwenkkolbenkammer 108 über die Schwenkkolbenflächen 110, 110a, dem Schwenkkolbenradius 118, wirkt und erzeugt ein Drehmoment im Expansionsbereich 162, 163, 163a. Geregelt wird der Expansionsdruck über den Einlass 123 und der Depotkammer 117 und dem Auslass 125. Im Scheitelpunkt 162 erzeugt die Rotationsenergie einen hohen Druckimpuls in der Schwenkkolbenkammer 108, dieser erzeugt im Expansionsbereich 163, 163a über die Tangente der parabelförmigen Laufbahn der Schwenkkolben 104, 104a an den Rotorachsen 103, 103a ein sehr hohes Drehmoment, das nun noch unterstützt und addiert wird, zu dem erzeugten Drehmoment der oberen Schwenkkolbenkammer 162 über die Schwenkkolbenflächen 115 und der Depotkammer 128 und dem magnetischen Moment der Laufplatten 183, 183a im Arbeitsbereich 162.

25. Rotationsschwenkkolbenmotor nach Anspruch 11, 12, 13, 14, 21 und 22, **dadurch gekennzeichnet,**
**dass** zwei Rotationsschwenkkolbenmotoren (50, 50a), deren Rotoren (102, 102a) gegenläufige Arbeitsdrehrichtungen haben,
**dass** das vorgespannte Arbeitsmittel beidseitig durch einen Strömungsverdichter (170, 171) über einem Druckverteiler (172, 173) in eine Depot- und Dosierkammer (174) gefahren wird,
**dass** die Schwenkkolbenbogenfläche (109, 109a) die Einlassöffnungen (175, 176) während der Arbeitsdrehung öffnen und
schließen,
**dass** das gasförmige vorgespannte Arbeitsmittel in der Depot- und Dosierkammer (174) über einen Verdichtungsstoß durch Strömungsveränderung, den Druck und die Temperatur erhöhen,
**dass** die Arbeitsweise polytrop, im zyklischen Arbeitstakt entsprechend der Schwenkkolbeneinteilung ist,
**dass** von den Rotorachsen (103, 103a) eine links- und rechtsdrehende Arbeitsdrehrichtung abgegriffen werden kann,
**dass** die Zahnräder (166, 166a) in ein Umlaufzahnrad (177) greifen und **dadurch** über die Hauptantriebswelle (178) ein sehr hohes Drehmiment erzeugen.
